(19)

Europäisches
Patentamt
European
Patent Office
Office européen
des brevets

(11) **EP 4 492 714 A1**

(12) **EUROPEAN PATENT APPLICATION**
published in accordance with Art. 153(4) EPC

(43) Date of publication:
**15.01.2025 Bulletin 2025/03**

(21) Application number: **23802624.9**

(22) Date of filing: **21.04.2023**

(51) International Patent Classification (IPC):
**H04L 1/00** (2006.01)

(52) Cooperative Patent Classification (CPC):
**H04L 1/00; H04L 1/1809; H04L 1/22**

(86) International application number:
**PCT/CN2023/089929**

(87) International publication number:
**WO 2023/216850 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.05.2022  CN 202210515741**

(71) Applicant: **Huawei Technologies Co., Ltd.
Shenzhen, Guangdong 518129 (CN)**

(72) Inventors:
• **PAN, Dao
Shenzhen, Guangdong 518129 (CN)**

• **YUE, Huawei
Shenzhen, Guangdong 518129 (CN)**
• **YAN, Yongli
Shenzhen, Guangdong 518129 (CN)**
• **LIN, Zefeng
Shenzhen, Guangdong 518129 (CN)**
• **JIANG, Xiaoming
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **CODING METHOD AND APPARATUS**

(57)     Embodiments of this application provide an encoding method and apparatus, to improve an encoding gain in an RCM. The method includes: performing bit mapping on $k_{rv1}$ information source bits whose reliability is lower than a first threshold in a first bit sequence, to obtain a second bit sequence, where the first bit sequence is a bit sequence obtained by performing bit mapping after cyclic redundancy check CRC bits are added to an information source bit sequence, the $k_{rv1}$ information source bits are bits in the information source bit sequence, and a length of the first bit sequence is equal to a length of the second bit sequence; performing an exclusive OR operation on bits in a bit sequence obtained by encoding the first bit sequence and bits in a bit sequence obtained by encoding the second bit sequence, to obtain a third bit sequence; or encoding the second bit sequence, to obtain a third bit sequence; and mapping, to an orthogonal frequency-division multiplexing OFDM symbol, the third bit sequence and the bit sequence obtained by encoding the first bit sequence.

An encoding apparatus performs bit mapping on $k_{rv1}$ information source bits whose reliability is lower than a first threshold in a first bit sequence, to obtain a second bit sequence — S701

The encoding apparatus performs an exclusive OR operation on bits in a bit sequence obtained by encoding the first bit sequence and bits in a bit sequence obtained by encoding the second bit sequence, to obtain a third bit sequence; or the encoding apparatus encodes the second bit sequence, to obtain a third bit sequence — S702

The encoding apparatus maps, to an OFDM symbol, the third bit sequence and the bit sequence obtained by encoding the first bit sequence — S703

FIG. 7

**Description**

This application claims priority to Chinese Patent Application No. 202210515741.8, filed with China National Intellectual Property Administration on May 11, 2022 and entitled "ENCODING METHOD AND APPARATUS", which is incorporated herein by reference in its entirety.

**TECHNICAL FIELD**

This application relates to the field of communication technologies, and in particular, to an encoding method and apparatus.

**BACKGROUND**

In a smart home scenario, to implement large-scale interconnection of smart household devices, an existing power network may be used. However, irregular and high-intensity pulse interference may be generated between power-consuming devices on a power cable. Therefore, a robust communication mode (robust communication mode, RCM) is used in the international telecommunications union-telecommunications standardization sector (international telecommunications union-telecommunications standardization sector, ITU-T) G.9960 protocol to resist the pulse interference, thereby improving reliability of information transmission.

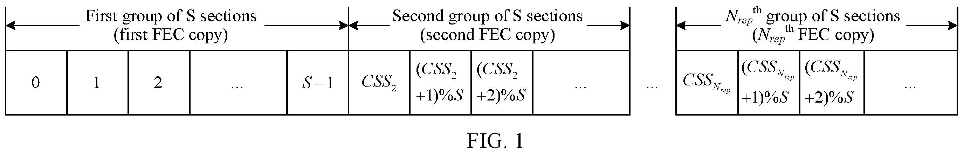

Specifically, in the RCM, as shown in FIG. 1, S sections (sessions), whose index numbers are sequentially 0, 1, 2, ..., and S-1, of a codeword (codeword) that has undergone polarization encoding and rate matching form a first group of S sections (group #1 of S sessions). The S sections in the first group of S sections are cyclically shifted based on a parameter $CSS_2$, to obtain S sections whose index numbers are sequentially $CSS_2$, $(CSS_2 +1)\%S$, $(CSS_2 + 2)\%S$, ..., and $(CSS_2 + S\text{ -}1)\%S$, that is, a second group of S sections (group #2 of S sessions). The second group of S sections and the first group of S sections are concatenated. Similarly, the S sections in the first group of S sections may be alternatively cyclically shifted separately based on parameters $CSS_3$, ..., and $CSS_{Nrep}$ -1, and then sequentially concatenated. Finally, the S sections in the first group of S sections are cyclically shifted based on a parameter $CSS_{Nrep}$, to obtain S sections whose index numbers are sequentially $CSS_{Nrep}$, $(CSS_{Nrep} +1)\%S$, $(CSS_{Nrep} +2)\%S$, ..., and $(CSS_{Nrep} + S\text{ -}1)\%S$, that is, a $CSS_{Nrep}$ th group of S sections (group # $CSS_{Nrep}$ of S sessions). The $CSS_{Nrep}$ th group of S sections and a previous obtained $CSS_{Nrep}$ -1th group of S sections are concatenated. Values of the parameters $CSS_2$, $CSS_3$, ..., and $CSS_{Nrep}$ may be obtained by querying a table. The first group of S sections may also be referred to as a first forward error correction (forward error correction, FEC) codeword copy (FEC copy #1), the second group of S sections may also be referred to as a second FEC copy, , and the $CSS_{Nrep}$ th group of S sections may also be referred to as a $CSS_{Nrep}$ th FEC copy.

In the foregoing RCM, the S sections of the codeword that has undergone rate matching are repeated for $N_{rep}$ times, and are cyclically shifted in each repetition based on a corresponding cyclic section shift (cyclic section shift, CSS) parameter, to resist pulse interference that may be received in a transmission process. However, with an increase of $N_{rep}$, a chase combine (chase combine, CC) gain that a receive end can obtain is limited.

**SUMMARY**

Embodiments of this application provide an encoding method and apparatus, to improve an encoding gain in an RCM. To achieve the foregoing objectives, the following technical solutions are used in embodiments of this application.

According to a first aspect, an encoding method is provided. An apparatus for performing the encoding method may be an encoding apparatus, or may be a module used in an encoding apparatus, for example, a Bluetooth chip or a chip system. The method includes: performing bit mapping on $k_{rv1}$ information source bits whose reliability is lower than a first threshold in a first bit sequence, to obtain a second bit sequence, where the first bit sequence is a bit sequence obtained by performing bit mapping after cyclic redundancy check CRC bits are added to an information source bit sequence, the $k_{rv1}$ information source bits are bits in the information source bit sequence, and a length of the first bit sequence is equal to a length of the second bit sequence; performing an exclusive OR operation on bits in a bit sequence obtained by encoding the first bit sequence and bits in a bit sequence obtained by encoding the second bit sequence, to obtain a third bit sequence; or encoding the second bit sequence, to obtain a third bit sequence; and mapping, to an orthogonal frequency-division multiplexing OFDM symbol, the third bit sequence and the bit sequence obtained by encoding the first bit sequence.

For a same information source bit sequence, the second bit sequence is introduced in the encoding method provided in this embodiment of this application, so that the third bit sequence and the bit sequence obtained by encoding the first bit sequence can be mapped to the OFDM symbol. This is different from a prior-art solution of directly encoding the first bit sequence and performing mapping to the OFDM symbol. Apparently, in this embodiment of this application, for the same information source bit sequence, the bit sequence obtained by encoding the first bit sequence is obtained, and more encoded codewords, that is, the third bit sequence, may be obtained. If a signal is affected by pulse interference in a transmission process, a proportion of an erroneous codeword in all codewords is smaller than that in the conventional technologies. In other words, in this embodiment of this application, more redundant information is introduced, so that a receive-end apparatus can correctly recover source data at a higher probability, thereby improving an encoding gain and improving reliability of an entire system. In addition, in this embodiment of this application, the $k_{rv1}$ information source bits whose reliability is lower than the first threshold may be selected from the first bit sequence to generate the second bit sequence. Because a bit with low reliability is more likely to encounter an error when the receive-end apparatus performs decoding, the second bit sequence is generated by using the $k_{rv1}$ information source bits, and the second bit sequence is further encoded to obtain the third bit sequence. In this way, decoding performance of the receive-end apparatus can be enhanced.

With reference to the first aspect, in a possible implementation, the mapping, to an OFDM symbol, the third bit sequence and the bit sequence obtained by encoding the first bit sequence includes: performing rate matching on the bit sequence obtained by encoding the first bit sequence, then performing segmentation to obtain $M_1$ groups of S sections, and performing the following operations on an $x_1$th group of S sections: repeating the $x_1$th group of S sections for $N_{rv0}$ times, and performing cyclic shift based on a corresponding cyclic section shift CSS parameter in each repetition, to obtain $N_{rv0} \times$ S sections, where $M_1$, S, $x_1$, and $N_{rv0}$ are all positive integers, and $1 \le x_1 \le M_1$; performing rate matching on the third bit sequence, then performing segmentation to obtain $M_1$ groups of S sections, and performing the following operations on an $x_2$th group of S sections: repeating the $x_2$th group of S sections for $N_{rv1}$ times, and performing cyclic shift based on a corresponding CSS parameter in each repetition, to obtain N rvl $\times S$ sections, where $x_2$ and $N_{rv1}$ are both positive integers, and $1 \le x_2 \le M_1$; and sequentially concatenating the $N_{rv0} \times$ S sections and the $N_{rv1} \times$ S sections, and performing mapping to the OFDM symbol; or concatenating the $N_{rv0} \times$ S sections and the $N_{rv1} \times$ S sections in an interleaving manner in a unit of a section, and performing mapping to the OFDM symbol. In this solution, segmentation, repetition, cyclic shift, and combination are appropriately performed on the third bit sequence and the bit sequence obtained by encoding the first bit sequence, and then mapping is performed to the OFDM symbol, so that more encoded codewords are carried on the same OFDM symbol.

With reference to the first aspect, in a possible implementation, $K_{rv1}$ bits whose reliability is higher than a second threshold in the second bit sequence are obtained by adding $L_{rv1}$ CRC bits to $k_{rv1}$ information source bits whose reliability is lower than the first threshold in the first bit sequence, where $K_{rv1} = k_{rv1} + L_{rv1}$, $k_{rv1}$, $L_{rv1}$, and $K_{rv1}$ are positive integers. In this solution, the $L_{rv1}$ CRC bits are added to the $k_{rv1}$ information source bits whose reliability is lower than the first threshold in the first bit sequence, to check whether an error occurs in a transmission process of the $k_{rv1}$ information source bits, thereby improving accuracy of recovering source data by the receive-end apparatus.

With reference to the first aspect, in a possible implementation, the performing rate matching on the bit sequence obtained by encoding the first bit sequence, and then performing segmentation to obtain $M_1$ groups of S sections includes: performing division to obtain M codewords, after rate matching is performed on the bit sequence obtained by encoding the first bit sequence, where each codeword includes E bits; repeating a final codeword in the M codewords for a plurality of times, so that a quantity of codewords is $H \times M_2$; dividing the $H \times M_2$ codewords into $M_2$ groups, where each group includes H codewords; and performing the following operations on an $x_3$th group of H codewords: concatenating the H codewords, and placing concatenated $H \times E$ bits into a first cyclic buffer; and concatenating first $B \times S - H \times E$ bits in the H codewords at an end of the H codewords, where H, E, $M_2$, and $x_3$ are all positive integers, $1 \le x_3 \le M_2$, and B represents a quantity of bits in each section; and reading $B \times S$ bits from the cyclic buffer, to generate one group of S sections, where each section includes B bits. For a segmentation process in this solution, refer to related steps in the conventional technologies. Therefore, compatibility between this solution and the conventional technologies can be improved.

With reference to the first aspect, in a possible implementation, the performing rate matching on the third bit sequence, and then performing segmentation to obtain $M_1$ groups of S sections includes: performing division to obtain M codewords, after rate matching is performed on the third bit sequence, where each codeword includes E bits; repeating a final codeword in the M codewords for a plurality of times, so that a quantity of codewords is $H \times M_2$; dividing the $H \times M_2$ codewords into $M_2$ groups, where each group includes H codewords; and performing the following operations on an $x_3$th group of H codewords: concatenating the H codewords, and placing concatenated $H \times E$ bits into a first cyclic buffer; and concatenating first $B \times S - H \times E$ bits in the H codewords at an end of the H codewords, where H, E, $M_2$, and $x_3$ are all positive integers, $1 \le x_3 \le M_2$, and B represents a quantity of bits in each section; and reading $B \times S$ bits from the cyclic buffer, to generate one group of S sections, where each section includes B bits. For a segmentation process in this solution, refer to related steps in the conventional technologies. Therefore, compatibility between this solution and the conventional technologies can be improved.

With reference to the first aspect, in a possible implementation, the performing rate matching on the bit sequence obtained by encoding the first bit sequence includes: performing bit interleaving on a fourth bit sequence, where the fourth bit sequence is a bit sequence obtained by performing sub-block interleaving and bit selection on the bit sequence obtained by encoding the first bit sequence; and the performing rate matching on the third bit sequence includes: performing bit interleaving on a fifth bit sequence, where the fifth bit sequence is a bit sequence obtained by performing sub-block interleaving and bit selection on the third bit sequence.

With reference to the first aspect, in a possible implementation, the encoding method provided in this embodiment of this application further includes: placing a fourth bit sequence and a fifth bit sequence into a second cyclic buffer, where the fourth bit sequence is a bit sequence obtained by performing sub-block interleaving and bit selection on the bit sequence obtained by encoding the first bit sequence, and the fifth bit sequence is a bit sequence obtained by performing sub-block interleaving and bit selection on the third bit sequence; and when the information source bit sequence is retransmitted, reading the bit sequence from an initial bit of the fourth bit sequence or the fifth bit sequence, and performing bit interleaving on the read bit sequence. In this solution, when the information source bit sequence is retransmitted, only a sequence in the second cyclic buffer needs to be read and then interleaved. In this case, steps of CRC addition, bit mapping, encoding, sub-block interleaving, and/or bit selection do not need to be performed again, to save software and hardware resources and time.

According to a second aspect, an encoding apparatus is provided, to implement the foregoing method. The encoding apparatus includes corresponding modules, units, or means (means) for implementing the foregoing method. The modules, units, or means may be implemented by hardware, software, or hardware executing corresponding software. The hardware or the software includes one or more modules or units corresponding to the foregoing functions.

With reference to the second aspect, in a possible implementation, the encoding apparatus includes a processor and a memory coupled to the processor. The memory is configured to store a program and data. The processor is configured to execute the program stored in the memory, to implement the following functions: the processor is configured to perform bit mapping on $k_{rv1}$ information source bits whose reliability is lower than a first threshold in a first bit sequence, to obtain a second bit sequence, where the first bit sequence is a bit sequence obtained by performing bit mapping after cyclic redundancy check CRC bits are added to an information source bit sequence, the $k_{rv1}$ information source bits are bits in the information source bit sequence, and a length of the first bit sequence is equal to a length of the second bit sequence; the processor is further configured to perform an exclusive OR operation on bits in a bit sequence obtained by encoding the first bit sequence and bits in a bit sequence obtained by encoding the second bit sequence, to obtain a third bit sequence; or the processor is further configured to encode the second bit sequence, to obtain a third bit sequence; and the processor is further configured to map, to an orthogonal frequency-division multiplexing OFDM symbol, the third bit sequence and the bit sequence obtained by encoding the first bit sequence.

With reference to the second aspect, in a possible implementation, that the processor is further configured to map, to an OFDM symbol, the third bit sequence and the bit sequence obtained by encoding the first bit sequence includes that the processor is configured to: perform rate matching on the bit sequence obtained by encoding the first bit sequence, then perform segmentation to obtain $M_1$ groups of S sections, and perform the following operations on an $x_1^{th}$ group of S sections: repeating the $x_1^{th}$ group of S sections for $N_{rv0}$ times, and performing cyclic shift based on a corresponding cyclic section shift CSS parameter in each repetition, to obtain $N_{rv0} \times$ S sections, where $M_1$, S, $x_1$, and $N_{rv0}$ are all positive integers, and $1 \le x_1 \le M_1$; the processor is configured to: perform rate matching on the third bit sequence, then perform segmentation to obtain $M_1$ groups of S sections, and perform the following operations on an $x_2^{th}$ group of S sections: repeating the $x_2^{th}$ group of S sections for $N_{rv1}$ times, and performing cyclic shift based on a corresponding CSS parameter in each repetition, to obtain $N_{rv1} \times S$ sections, where $x_2$ and $N_{rv1}$ are both positive integers, and $1 \le x_2 \le M_1$; and the processor is configured to: sequentially concatenate the $N_{rv0} \times S$ sections and the $N_{rv1} \times S$ sections, and perform mapping to the OFDM symbol; or concatenate the $N_{rv0} \times S$ sections and the $N_{rv1} \times S$ sections in an interleaving manner in a unit of a section, and perform mapping to the OFDM symbol.

With reference to the second aspect, in a possible implementation, $K_{rv1}$ bits whose reliability is higher than a second threshold in the second bit sequence are obtained by adding $L_{rv1}$ CRC bits to $k_{rv1}$ information source bits whose reliability is lower than the first threshold in the first bit sequence, where $K_{rv1} = k_{rv1} + L_{rv1}$, $k_{rv1}$, $L_{rv1}$, and $K_{rv1}$ are positive integers.

With reference to the second aspect, in a possible implementation, the communication apparatus further includes a memory. That the processor is further configured to: perform rate matching on the bit sequence obtained by encoding the first bit sequence, and then perform segmentation to obtain $M_1$ groups of S sections includes that the processor is configured to: perform division to obtain M codewords, after rate matching is performed on the bit sequence obtained by encoding the first bit sequence, where each codeword includes E bits; repeat a final codeword in the M codewords for a plurality of times, so that a quantity of codewords is $H \times M_2$; and divide the $H \times M_2$ codewords into $M_2$ groups, where each group includes H codewords; and the processor is configured to perform the following operations on an $x_3^{th}$ group of H codewords: concatenating the H codewords, and placing concatenated $H \times E$ bits into the memory; and concatenating first $B \times S - H \times E$ bits in the H codewords at an end of the H codewords, where H, E, $M_2$, and $x_3$ are all positive integers, $1 \le x_3 \le M_2$, and B represents a quantity of bits in each section; and reading $B \times S$ bits from the memory, to generate one group of S sections, where each section includes B bits.

With reference to the second aspect, in a possible implementation, the communication apparatus further includes a memory. That the processor is further configured to: perform rate matching on the third bit sequence, and then perform segmentation to obtain $M_1$ groups of S sections includes that the processor is configured to: perform division to obtain M codewords, after rate matching is performed on the third bit sequence, where each codeword includes E bits; repeat a final codeword in the M codewords for a plurality of times, so that a quantity of codewords is $H \times M_2$; and divide the $H \times M_2$ codewords into $M_2$ groups, where each group includes H codewords; and the processor is configured to perform the following operations on an $x_3^{th}$ group of H codewords: concatenating the H codewords, and placing concatenated $H \times E$ bits into the memory; and concatenating first $B \times S - H \times E$ bits in the H codewords at an end of the H codewords, where H, E, $M_2$, and $x_3$ are all positive integers, $1 \leq x_3 \leq M_2$, and B represents a quantity of bits in each section; and the processor is configured to read $B \times S$ bits from the memory, to generate one group of S sections, where each section includes B bits.

With reference to the second aspect, in a possible implementation, that the processor is further configured to perform rate matching on the bit sequence obtained by encoding the first bit sequence includes that the processor is configured to perform bit interleaving on a fourth bit sequence, where the fourth bit sequence is a bit sequence obtained by performing sub-block interleaving and bit selection on the bit sequence obtained by encoding the first bit sequence; and that the processor is further configured to perform rate matching on the third bit sequence includes that the processor is configured to perform bit interleaving on a fifth bit sequence, where the fifth bit sequence is a bit sequence obtained by performing sub-block interleaving and bit selection on the third bit sequence.

With reference to the second aspect, in a possible implementation, the communication apparatus further includes a memory. The processor is further configured to place a fourth bit sequence and a fifth bit sequence into the memory. The fourth bit sequence is a bit sequence obtained by performing sub-block interleaving and bit selection on the bit sequence obtained by encoding the first bit sequence. The fifth bit sequence is a bit sequence obtained by performing sub-block interleaving and bit selection on the third bit sequence. The processor is further configured to: when the information source bit sequence is retransmitted, read the bit sequence from an initial bit of the fourth bit sequence or the fifth bit sequence, and perform bit interleaving on the read bit sequence.

According to a third aspect, a communication apparatus is provided, including a processor. The processor is configured to: couple to a memory, read computer instructions stored in the memory, and perform the method in the first aspect according to the instructions.

With reference to the third aspect, in a possible implementation, the communication apparatus further includes the memory. The memory is configured to store the computer instructions.

With reference to the third aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, or a related circuit.

With reference to the third aspect, in a possible implementation, the communication apparatus may be a chip or a chip system. When the communication apparatus is the chip system, the communication apparatus may include a chip, or may include a chip and another discrete device.

According to a fourth aspect, a computer-readable storage medium is provided. The computer-readable storage medium stores instructions. When the instructions are run on a computer, the computer is enabled to perform the method in the first aspect.

According to a fifth aspect, a transmit-end apparatus is provided. The transmit-end apparatus includes a front-end module and the encoding apparatus in the second aspect. The encoding apparatus is configured to: encode an information source bit sequence, and perform mapping to an OFDM symbol. The front-end module is configured to: convert an output of the encoding apparatus into a wireless signal, and send the wireless signal.

With reference to the fifth aspect, in a possible implementation, the transmit-end apparatus further includes a modulation module. That the front-end module is configured to: convert an output of the encoding apparatus into a wireless signal, and send the wireless signal includes that the front-end module is configured to modulate, by using the modulation module, the output of the encoding apparatus into a high-frequency signal; and the front-end module is configured to: convert the high-frequency signal into a wireless signal, and send the wireless signal.

According to a sixth aspect, a communication system is provided. The communication system includes a receive-end apparatus and the transmit-end apparatus in the fifth aspect. The receive-end apparatus is configured to: receive a wireless signal from the transmit-end apparatus, and recover an information source bit sequence based on the wireless signal.

According to a seventh aspect, a computer program product including instructions is provided. When the computer program product runs on a computer, the computer is enabled to perform the method in the first aspect.

For technical effects brought by any one of possible implementations of the second aspect to the seventh aspect, refer to the technical effects brought by the first aspect or the different implementations of the first aspect. Details are not described herein again.

## BRIEF DESCRIPTION OF DRAWINGS

FIG. 1 is a diagram 1 of a principle of an existing RCM solution;

FIG. 2 is a flowchart of parameter calculation in an existing RCM solution;

FIG. 3 is a diagram 2 of a principle of an existing RCM solution;

FIG. 4 is a diagram 1 of an architecture of a communication system according to an embodiment of this application;

FIG. 5 is a diagram 2 of an architecture of a communication system according to an embodiment of this application;

FIG. 6 is a diagram 1 of a structure of a communication apparatus according to an embodiment of this application;

FIG. 7 is a flowchart of an encoding method according to an embodiment of this application;

FIG. 8 is a diagram of adding CRC bits to an information source bit sequence by an encoding apparatus according to an embodiment of this application;

FIG. 9 is a diagram of a manner of generating a first bit sequence according to an embodiment of this application;

FIG. 10 is a diagram of a manner of generating a second bit sequence according to an embodiment of this application;

FIG. 11 is a diagram of performing polar code encoding on a first bit sequence by an encoding apparatus according to an embodiment of this application;

FIG. 12 is a diagram of a manner of generating a third bit sequence according to an embodiment of this application;

FIG. 13 is a diagram of another manner of generating a third bit sequence according to an embodiment of this application;

FIG. 14 is a diagram of a manner of generating and processing a first bit sequence according to an embodiment of this application;

FIG. 15 is a diagram of bit selection according to an embodiment of this application;

FIG. 16 is a diagram of performing repetition and cyclic shift on S sections by an encoding apparatus according to an embodiment of this application;

FIG. 17 is a diagram of a relationship between a bit sequence and a start location according to an embodiment of this application; and

FIG. 18 is a diagram 2 of a structure of a communication apparatus according to an embodiment of this application.

## DESCRIPTION OF EMBODIMENTS

For ease of understanding of the technical solutions in embodiments of this application, the following first briefly describes technologies or terms related to this application.

1. Parameter calculation in an RCM solution

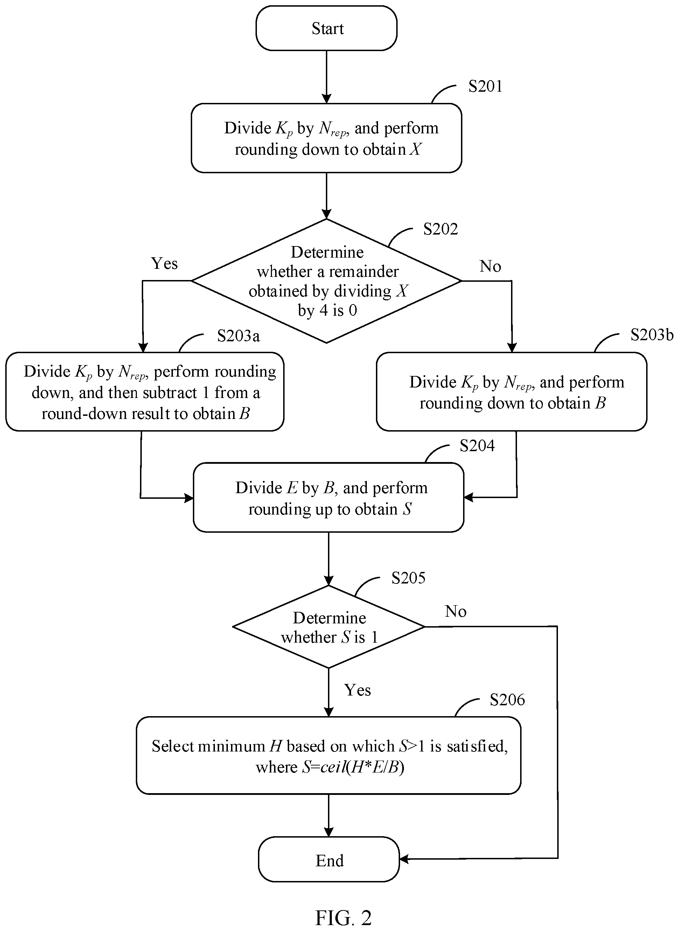

As described in the background, large-scale interconnection of smart household devices may be implemented by using an existing power network. Therefore, a power-line communication (power-line communication, PLC) technology emerges. In an orthogonal frequency-division multiplexing (orthogonal frequency-division multiplexing, OFDM)-based PLC system, based on given parameters including a quantity of bits that can be carried in each OFDM symbol: $K_p$, a quantity of repetitions of a codeword: $N_{rep}$, a quantity of bits included in each codeword: $E$, and a CSS, the parameters in the RCM solution that include a codeword concatenation coefficient $H$, a quantity of bits included in each section: $B$, and a quantity of sections included in each group: $S$ may be calculated by using the following steps shown in FIG. 2:

Step S201: Divide $K_p$ by $N_{rep}$, and perform rounding down to obtain $X$. This step may also be expressed in a programming language as: $X=floor(K_p / N_{rep})$.

Step S202: Determine whether a remainder obtained by dividing $X$ by 4 is 0. This step may also be expressed in the programming language as: $mod(X,4) = 0$. If a result of determining is yes, the following step S3a is performed; or if a result of determining is no, the following step S3b is performed.

Step S203a: Divide $K_p$ by $N_{rep}$, perform rounding down, and then subtract 1 from a round-down result to obtain $B$. This step may also be expressed in the programming language as: $B=floor(K_p / N_{rep})-1$.

Step S203b: Divide $K_p$ by $N_{rep}$, and perform rounding down to obtain $B$. This step may also be expressed in the programming language as: $B=floor(K_p / N_{rep})$.

Step S204: Divide $E$ by $B$, and perform rounding up to obtain $S$. This step may also be expressed in the programming language as: $S=ceil(E / B)$.

Step S205: Determine whether $S$ is 1. If a result of determining is yes, the following step S6 is performed; or if a result of determining no, the procedure ends.

Step S206: Select minimum $H$ based on which $S > 1$ is satisfied, where $S = ceil(H * E / B)$. For example, an initial value of $H$ is 1, and may be substituted into the formula $S = ceil(H * E / B)$ to obtain a value of S corresponding to $H = 1$. If $S > 1$ is not satisfied, the value of $H$ is increased by 1, and becomes 2. The value of $H$ is increased by 1 in each time until $S > 1$ is satisfied. In this case, the value of $H$ is not increased, and the value of $H$ is the selected value.

It should be noted that *H* is a positive integer, and a default value is 1.

2. RCM solution for mapping, to an OFDM symbol, a codeword that has undergone rate matching

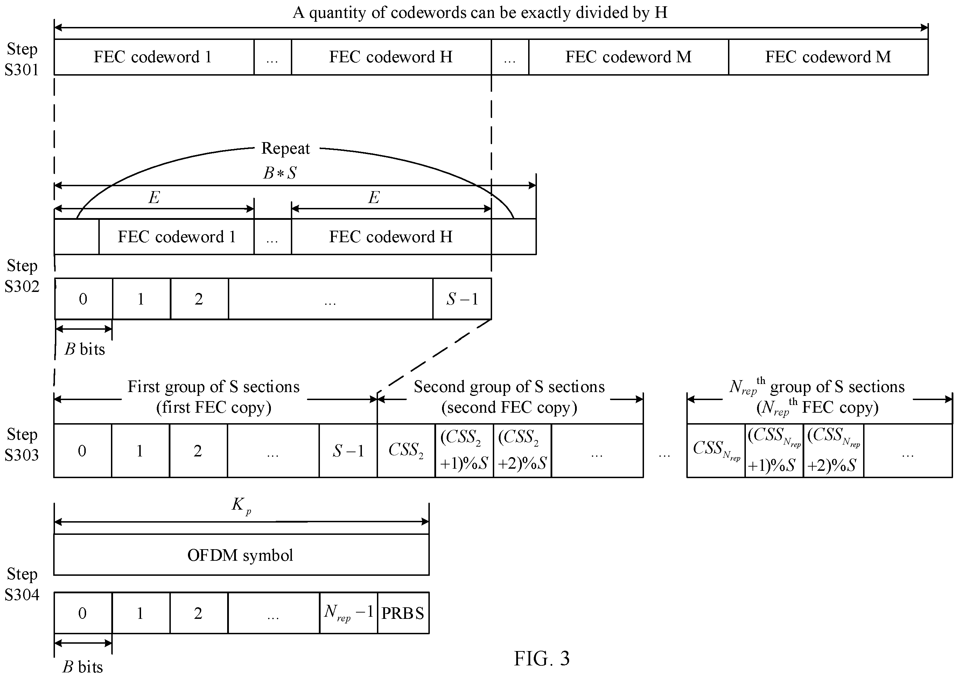

An FEC codeword 1 (codeword_1), an FEC codeword 2 (codeword_2), ..., and an FEC codeword M (codeword_M) that are generated after rate matching may be mapped to an OFDM symbol by using the following steps shown in FIG. 3:
Step S301: Repeat a final codeword in the M codewords for a plurality of times, so that a quantity of codewords can be exactly divided by H. In other words, the quantity of codewords may be H×M$_2$, where M$_2$ is a positive integer. Each codeword includes *E* bits.
The H×M$_2$ codewords are divided into M$_2$ groups. Each group includes H codewords. For any group of H codewords, the following step S302 to step S304 may be performed. The following uses a first group of H codewords as an example for description.
Step S302: Concatenate the H codewords, and place the concatenated H×E bits into a cyclic buffer;

repeatedly concatenate first B×S-H×E bits of the H codewords at an end of the H codewords; and
read B×S bits from the cyclic buffer, to generate one group including S sections whose index numbers are 0 to S-1, where each section includes B bits.

Step S303: Repeat the first group of S sections generated based on the first group of H codewords for $N_{rep}$ times, and perform cyclic shift based on a corresponding CSS parameter in each repetition, to obtain $N_{rep}$ × S sections. For specific implementations of repetition and cyclic shift, refer to the embodiment corresponding to FIG. 1 mentioned in the background. Details are not described herein again.
Step S304: Map $K_p$ bits to one OFDM symbol, where the $K_p$ bits include $N_{rep}$ × B bits of $N_{rep}$ sections and $K_p$ - B × $N_{rep}$ bits of a pseudo random sequence (pseudo random binary sequence, PRBS).
It should be noted that the CSS parameter in step S303 may be obtained by querying a table. For example, a program for providing a CSS parameter lookup table is as follows:

```
if(Nrep == 2) {
        if(S % 2 == 0){
            CSS[0] = 0; CSS[1] = 1;
        }else{
            CSS[0] = 0; CSS[1] = 0;
        }
    }else if(Nrep == 3){
        if (S % 3 == 0){
            CSS[0] = 0; CSS[1] = 1; CSS[2] = 2;
        }else{
            CSS[0] = 0; CSS[1] = 0; CSS[2] = 0;
```

```
        }
    }else if(Nrep == 4){
        if(S % 4 == 0){
            CSS[0] = 0; CSS[1] = 1; CSS[2] = 2; CSS[3] = 3;
        }else if(S % 2 == 0){
            CSS[0] = 0; CSS[1] = 0; CSS[2] = 1; CSS[3] = 1;
        }else{
            CSS[0] = 0; CSS[1] = 0; CSS[2] = 0; CSS[3] = 0;
        }
    }else if(Nrep == 5){
        if(S % 5 == 0){
            CSS[0] = 0; CSS[1] = 1; CSS[2] = 2; CSS[3] = 3; CSS[4] = 4;
        }else{
            CSS[0] = 0; CSS[1] = 0; CSS[2] = 0; CSS[3] = 0; CSS[4] = 0;
        }
    }else if(Nrep == 6){
        if(S % 6 == 0){
            CSS[0] = 0; CSS[1] = 1; CSS[2] = 2; CSS[3] = 3; CSS[4] = 4; CSS[5] = 5;
        }else if (S % 3 == 0){
            CSS[0] = 0; CSS[1] = 0; CSS[2] = 1; CSS[3] = 1; CSS[4] = 2; CSS[5] = 2;
        }else if (S % 2 == 0){
            CSS[0] = 0; CSS[1] = 0; CSS[2] = 0; CSS[3] = 1; CSS[4] = 1; CSS[5] = 1;
        }else{
            CSS[0] = 0; CSS[1] = 0; CSS[2] = 0; CSS[3] = 0; CSS[4] = 4; CSS[5] = 0;
        }
    }else if(Nrep == 7){
        if(S % 7 == 0){
            CSS[0] = 0; CSS[1] = 1; CSS[2] = 2; CSS[3] = 3; CSS[4] = 4; CSS[5] = 5; CSS[6] = 6;
        }else{
            CSS[0] = 0; CSS[1] = 0; CSS[2] = 0; CSS[3] = 0; CSS[4] = 0; CSS[5] = 0; CSS[6] = 0;
        }
    }else if (Nrep == 8){
        if (S % 8 == 0){
            CSS[0] = 0; CSS[1] = 1; CSS[2] = 2; CSS[3] = 3;
            CSS[4] = 4; CSS[5] = 5; CSS[6] = 6; CSS[7] = 7;
        }else if (S % 4 == 0){
            CSS[0] = 0; CSS[1] = 0; CSS[2] = 1; CSS[3] = 1;
            CSS[4] = 2; CSS[5] = 2: CSS[6] = 3; CSS[7] = 3;
        }else if (S % 2 == 0){
            CSS[0] = 0; CSS[1] = 0; CSS[2] = 0; CSS[3] = 0;
            CSS[4] = 1; CSS[5] = 1; CSS[6] = 1; CSS[7] = 1;
        }else{
```

$$CSS[0] = 0; CSS[1] = 0; CSS[2] = 0; CSS[3] = 0;$$
$$CSS[4] = 0; CSS[5] = 0; CSS[6] = 0; CSS[7] = 0;$$
$$\}$$
$$\}else\{$$
$$CSS[0] = 0; CSS[1] = 0; CSS[2] = 0; CSS[3] = 0;$$
$$CSS[4] = 0; CSS[5] = 0; CSS[6] = 0; CSS[7] = 0;$$
$$\}$$

3. Problems of an existing RCM solution

As described in the background, in the foregoing RCM, pulse interference that may be received in a transmission process can be resisted only by repeating, for $N_{rep}$ times, S sections of a codeword that has undergone rate matching, and performing cyclic shift based on a corresponding CSS parameter in each repetition. For example, a correspondence between $N_{rep}$ and a CC gain that can be obtained by a receive end may be shown in the following Table 1:

**Table 1**

| $N_{rep}$ | 1 | 2 | 4 | 6 | 8 | 10 | 12 |
|---|---|---|---|---|---|---|---|
| CC gain relative to $N_{rep}$ = 1 (unit: dB) | 0 | 3.0 | 6.0 | 7.8 | 9.0 | 10.0 | 10.8 |

It can be learned from Table 1 that, with an increase of $N_{rep}$, an increase of the CC gain gradually slows down, and a value of the CC gain is limited.

For a problem that the CC gain is limited in the existing RCM solution, an encoding gain can be increased in this embodiment of this application, so that the receive end can correctly recover source data with a higher probability, thereby improving reliability of an entire system.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution order, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

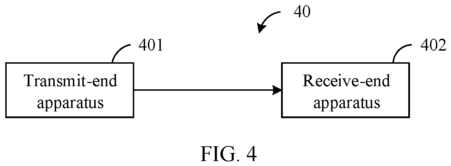

FIG. 4 shows a communication system 40 according to an embodiment of this application. The communication system 40 includes a transmit-end apparatus 401 and a receive-end apparatus 402. The transmit-end apparatus 401 is configured to perform bit mapping on $k_{rv1}$ information source bits whose reliability is lower than a first threshold in a first bit sequence, to obtain a second bit sequence. The first bit sequence is a bit sequence obtained by performing bit mapping after CRC bits are added to the information source bit sequence. The $k_{rv1}$ information source bits are bits in the information source bit sequence. A length of the first bit sequence is equal to a length of the second bit sequence. The transmit-end apparatus 401 is further configured to: perform an exclusive OR operation on bits in a bit sequence obtained by encoding the first bit sequence and bits in a bit sequence obtained by encoding the second bit sequence, to obtain a third bit sequence; and map, to an OFDM symbol, the third bit sequence and the bit sequence obtained by encoding the first bit sequence. Alternatively, the transmit-end apparatus 401 is further configured to map, to an OFDM symbol, the third bit sequence and the bit sequence obtained by encoding the first bit sequence, where the third bit sequence and the second bit sequence are the same bit sequence. Specific implementation and technical effects of the solution are described in detail in subsequent method embodiments, and details are not described herein again. The transmit-end apparatus 401 is further configured to send a wireless signal to the receive-end apparatus 402. Correspondingly, the receive-end apparatus 402 is configured to: receive the wireless signal from the transmit-end apparatus 401, and recover the information source bit sequence based on the received wireless signal.

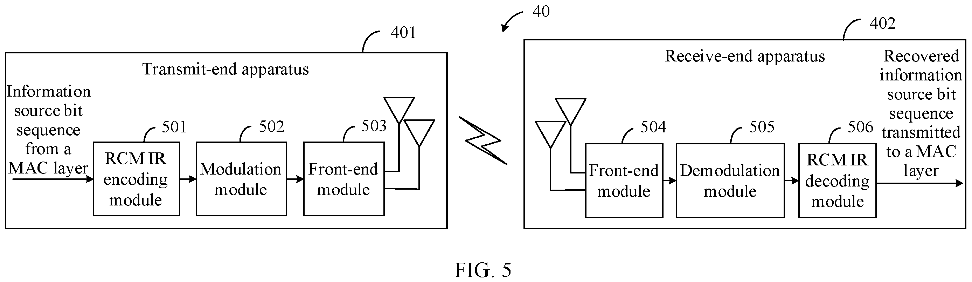

FIG. 5 shows a specific example of a communication system 40 according to an embodiment of this application.

In the transmit-end apparatus 401, the information source bit sequence from a medium access control (medium access control, MAC) layer is processed by an RCM incremental redundancy (incremental redundancy, IR) encoding module 501, a modulation module 502, and a front-end module 503, and then becomes the wireless signal to be sent by a transmit-end antenna. The RCM IR encoding module 501 is configured to map the information source bit sequence to the OFDM symbol. For a specific processing procedure, refer to the encoding method provided in embodiments of this application. The modulation module 502 is configured to convert, into a high-frequency signal suitable for channel transmission, a baseband signal output by the RCM IR encoding module 501. A modulation scheme may be, for example, 64 quadrature amplitude modulation (64 quadrature amplitude modulation, 64QAM). This is not limited in this embodiment of this application. The front-end module 503 may also be referred to as a radio frequency module, and is configured to convert, into a wireless signal, a signal output by the modulation module 502.

In the receive-end apparatus 402, the received wireless signal is processed by a front-end module 504, a demodulation module 505, and an RCM IR decoding module 506, and a recovered information source bit sequence is transmitted to a MAC layer. The front-end module 504 may also be referred to as a radio frequency module, and is configured to convert the received wireless signal into a wired signal. The demodulation module 505 is configured to generate log-likelihood ratio (log-likelihood ratio, LLR) soft information based on the signal output by the front-end module 504. The RCM IR decoding module 506 is configured to recover the information source bit sequence based on the LLR soft information.

It should be noted that, due to impact such as channel noise, it is very likely that the information source bit sequence in the transmit-end apparatus 401 is different from the information source bit sequence recovered in the receive-end apparatus 402. This application is intended to improve a similarity between the two sequences, even if there are more same bits between the two sequences.

Optionally, a related function of the transmit-end apparatus in this embodiment of this application may be implemented by one device, or may be jointly implemented by a plurality of devices, or may be implemented by one or more functional modules in one device. This is not specifically limited in this embodiment of this application. It may be understood that the foregoing function may be a network element in a hardware device, a software function running on dedicated hardware, a combination of hardware and software, or a virtualized function instantiated on a platform (for example, a cloud platform).

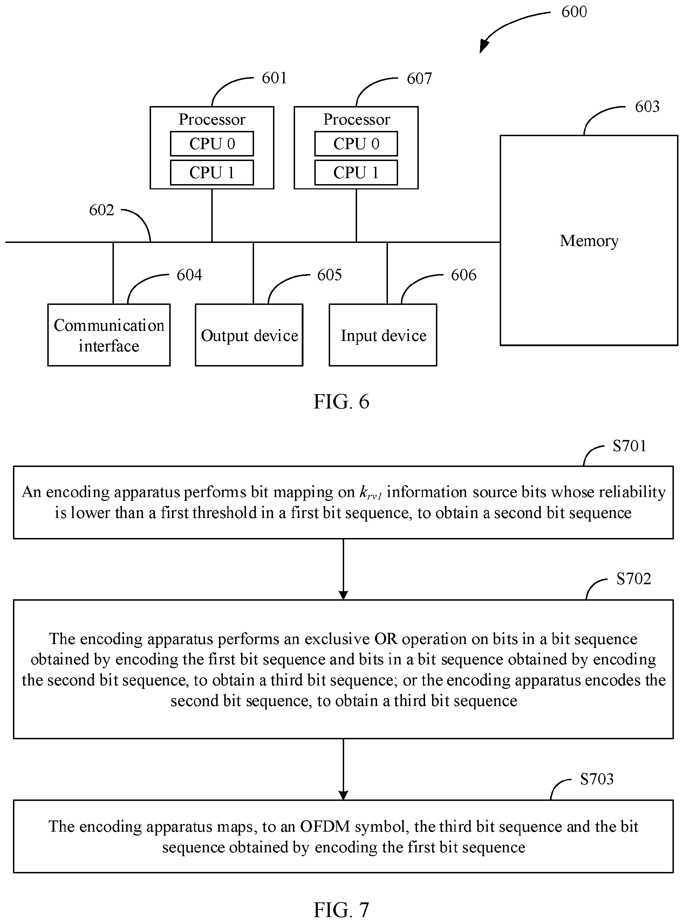

For example, related functions of the transmit-end apparatus in this embodiment of this application may be implemented by a communication apparatus 600 in FIG. 6.

FIG. 6 is a diagram of a structure of the communication apparatus 600 according to an embodiment of this application. The communication apparatus 600 includes one or more processors 601, a communication line 602, and at least one communication interface (in FIG. 6, an example in which a communication interface 604 and one processor 601 are included is merely used for illustration). Optionally, a memory 603 may be further included.

The processor 601 may be a CPU, a microprocessor, an application-specific integrated circuit (application-specific integrated circuit, ASIC), or one or more integrated circuits configured to control program execution of the solutions of this application.

The communication line 602 may include a path, configured to connect different components.

The communication interface 604 may be a transceiver module, configured to communicate with another device or a communication network, for example, Ethernet, a RAN, or a WLAN. For example, the transceiver module may be an apparatus such as a transceiver or a transceiver machine. Optionally, the communication interface 604 may be alternatively a transceiver circuit located in the processor 601, to implement signal input and signal output of the processor.

The memory 603 may be an apparatus having a storage function. The memory 603 may be a read-only memory (read-only memory, ROM), another type of static storage device that can store static information and an instruction, a random access memory (random access memory, RAM), or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in a form of an instruction or a data structure and that can be accessed by a computer. However, this is not limited thereto. The memory may exist independently, and is connected to the processor through the communication line 602. The memory may be alternatively integrated with the processor

The memory 603 is configured to store computer-executable instructions for performing the solutions in this application, and the processor 601 controls execution. The processor 601 is configured to execute the computer-executable instructions stored in the memory 603, to implement the encoding method provided in embodiments of this application.

Alternatively, in this embodiment of this application, the processor 601 may implement a processing-related function in the encoding method provided in the following embodiments of this application, and the communication interface 604 may be responsible for communicating with the another device or the communication network. This is not specifically limited in this embodiment of this application.

The computer-executable instructions in this embodiment of this application may also be referred to as application program code. This is not specifically limited in this embodiment of this application.

During specific implementation, in an embodiment, the processor 601 may include one or more CPUs, for example, a CPU 0 and a CPU 1 in FIG. 6.

During specific implementation, in an embodiment, the communication apparatus 600 may include a plurality of processors, for example, the processor 601 and a processor 607 in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 600 may further include an output device 605 and an input device 606. The output device 605 communicates with the processor 601, and may display information in a plurality of manners.

The communication apparatus 600 may be a general-purpose apparatus or a dedicated apparatus. For example, the communication apparatus 600 may be a desktop computer, a portable computer, a network server, a palmtop computer (personal digital assistant, PDA), a mobile phone, a tablet computer, a wireless terminal apparatus, an in-vehicle terminal apparatus, an embedded device, or a device having a structure similar to that in FIG. 6. A type of the communication apparatus 600 is not limited in this embodiment of this application.

The following describes in detail the encoding method provided in embodiments of this application with reference to FIG. 1 to FIG. 6.

FIG. 7 shows an encoding method according to an embodiment of this application. The encoding method includes the following steps.

S701: An encoding apparatus performs bit mapping on $k_{rv1}$ information source bits whose reliability is lower than a first threshold in a first bit sequence, to obtain a second bit sequence. The first bit sequence is a bit sequence obtained by performing bit mapping after CRC bits are added to the information source bit sequence. The $k_{rv1}$ information source bits are bits in the information source bit sequence. A length of the first bit sequence is equal to a length of the second bit sequence.

In this embodiment of this application, $v_i^j$ represents a sequence $v_i^j = \{v_i, v_{i+1}, v_{i+2}, \cdots, v_j\}$ with a length of max($j - i + 1, 0$). When $j < i$, the sequence is empty ø. This is uniformly described herein. Details are not described below again.

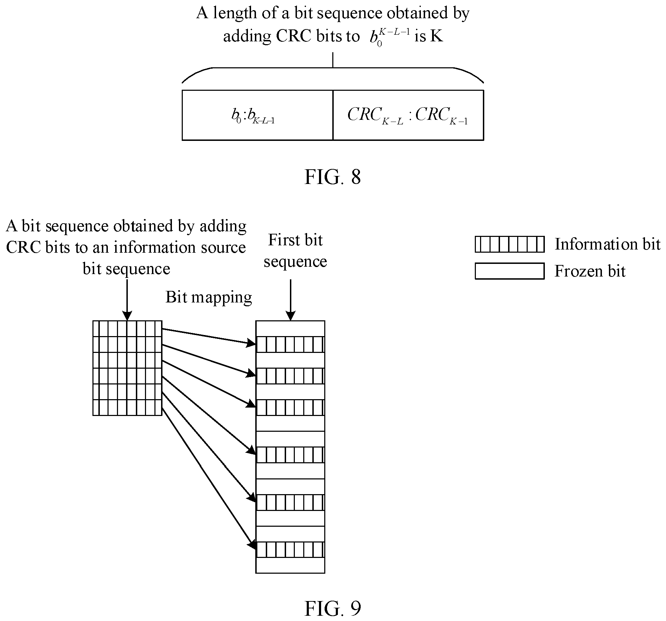

For example, the information source bit sequence is $b_0^{K-L-1}$. FIG. 8 shows a process of adding CRC bits to the information source bit sequence $b_0^{K-L-1}$ by the encoding apparatus. The information source bit sequence $b_0^{K-L-1}$ includes bits $b_0$, $b_1$, ..., and $b_{K-L-1}$. The encoding apparatus may add CRC bits $CRC_{K-L}$, $CRC_{K-L+1}$, ..., and $CRC_{K-1}$ after the bit $b_{K-L-1}$, to form a bit sequence $v_0^{K-1}$ with a length of $K$. The encoding apparatus adds the CRC bits to the information source bit sequence $b_0^{K-L-1}$, so that a receive-end apparatus can use a CRC-aided successive cancellation list (CRC-aided successive cancellation list, CA-SCL) algorithm to improve decoding performance.

For example, FIG. 9 shows a process in which the encoding apparatus performs bit mapping on the bit sequence $v_0^{K-1}$ to obtain the first bit sequence. Specifically, the encoding apparatus maps the bit sequence $v_0^{K-1}$ and one or more bits with a fixed value to a bit sequence with a length of $N$, that is, the first bit sequence $u_{rv0_0}^{N-1}$. The one or more bits with the fixed value may be a bit "0" or a bit" 1". These bits with the fixed value may be referred to as frozen bits because these bits do not carry any information. Correspondingly, because the bit sequence $v_0^{K-1}$ carries information, the bit sequence $v_0^{K-1}$ may be referred to as an information bit. In the embodiment shown in FIG. 8, the bit sequence $v_0^{K-1}$ includes the information source bit sequence $b_0^{K-L-1}$ and the CRC bits.

It should be noted that an index of a bit in the first bit sequence $u_{rv0\,0}^{N-1}$ has corresponding reliability, and an error is more likely to occur when a bit carried with a bit index corresponding to low reliability is decoded at a receive end. A reliability measure table used for recording a correspondence between a bit index and reliability may be preset according to a protocol. During bit mapping, an information bit in the bit sequence $v_0^{K-1}$ may be preferentially mapped to a bit index corresponding to high reliability.

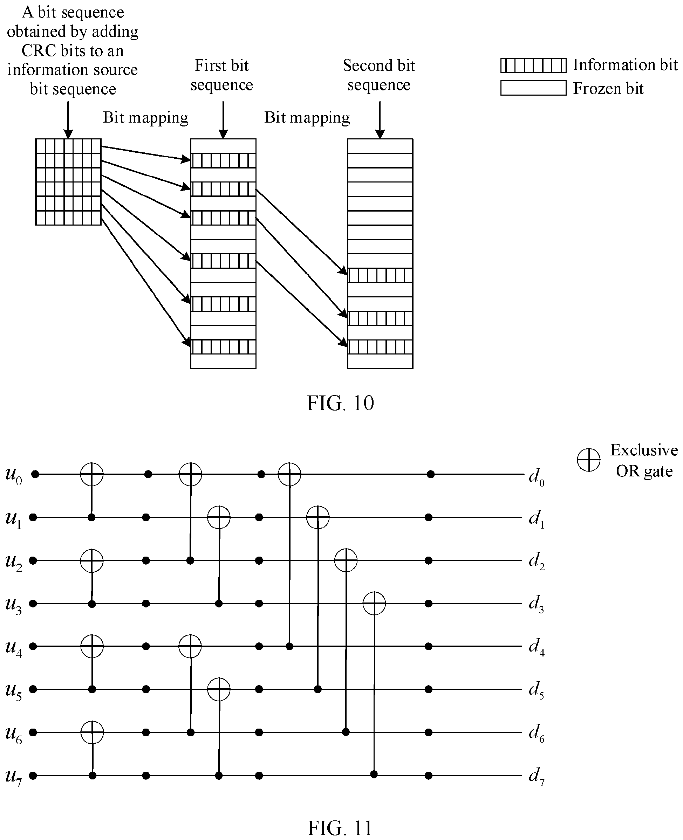

With reference to FIG. 9, FIG. 10 shows a process in which the encoding apparatus generates the second bit sequence. As described above, the first bit sequence $u_{rv0\,0}^{N-1}$ includes the information source bits, the CRC bits, and the frozen bits. The encoding apparatus may perform bit mapping on the $k_{rv1}$ information source bits whose reliability is lower than the first threshold in the first bit sequence $u_{rv0\,0}^{N-1}$, to obtain the second bit sequence $u_{rv1\,0}^{N-1}$.

Optionally, $K_{rv1}$ bits whose reliability is higher than a second threshold in the second bit sequence are obtained by adding $L_{rv1}$ CRC bits to the $k_{rv1}$ information source bits whose reliability is lower than the first threshold in the first bit sequence, where $K_{rv1} = k_{rv1} + L_{rv1}$, $k_{rv1}$, $L_{rv1}$, and $K_{rv1}$ are positive integers. In this solution, the $L_{rv1}$ CRC bits are added to the $k_{rv1}$ information source bits whose reliability is lower than the first threshold in the first bit sequence, to check whether an error occurs in a transmission process of the $k_{rv1}$ information source bits, thereby improving accuracy of recovering source data by the receive-end apparatus.

It is assumed that an available physical resource in FIG. 10 is $E_{rv1}$ bits, an expected bit rate is $R_{rv1}$, and $R_{rv1}$ satisfies $R_{rv1} \ll \frac{K_{rv0}}{E_{rv0}}$, to ensure reliability of performing bit mapping on the $k_{rv1}$ information source bits. In this case, a quantity of information bits in the second bit sequence $u_{rv10}^{N-1}$ is $K_{rv1} = k_{rv1} + L_{rv1} = \lceil E_{rv1} \times R_{rv1} \rceil + L_{rv1}$. Herein, « represents far less than, $\lceil \cdot \rceil$ represents rounding up, and the expected bit rate $R_{rv1}$ may be obtained through simulation or may be an empirical value.

It should be noted that, to make the accompanying drawings more concise and intuitive, FIG. 10 does not show a process in which the encoding apparatus adds the $L_{rv1}$ CRC bits to the $k_{rv1}$ information source bits whose reliability is lower than the first threshold in the first bit sequence $u_{rv0\,0}^{N-1}$.

S702: The encoding apparatus performs an exclusive OR operation on bits in a bit sequence obtained by encoding the first bit sequence and bits in a bit sequence obtained by encoding the second bit sequence, to obtain a third bit sequence; or the encoding apparatus encodes the second bit sequence, to obtain a third bit sequence.

In this embodiment of this application, because the length of the first bit sequence is equal to the length of the second bit sequence, lengths of the two bit sequences obtained by respectively encoding the first bit sequence and the second bit sequence by using a same encoder are also equal.

In this embodiment of this application, the encoder may be, for example, a polar (polar) code encoder. For example, the encoding apparatus may perform a Kronecker product (Kronecker product) operation on the first bit sequence $u_{rv0\,0}^{N-1}$ with a length of $N$, to obtain an encoded bit sequence $d_{rv0\,0}^{N-1}$. Specifically, $d_{rv0\,0}^{N-1}$ may satisfy the following Formula (1):

$$d_{rv0\,0}^{N-1} = u_{rv0\,0}^{N-1} G_N \qquad \text{Formula (1)}$$

Herein, $N = 2^n$, $n$ is a positive integer, $N$ represents the length of the first bit sequence or the length of the bit sequence obtained by encoding the first bit sequence, $G_N = F^{\otimes n}$, $F = \begin{bmatrix} 1 & 0 \\ 1 & 1 \end{bmatrix}$, $\otimes n$ represents an $n$-order Kronecker product, and $G_N$ represents a generator matrix of $N \times N$.

The following describes a polar code encoding process by using an example in which the first bit sequence $u_{rv0\,0}^{N-1}$ is $\{u_0, u_1, u_2, \cdots, v_7\}$, that is, $N = 8$.

As shown in FIG. 11, a first encoded bit is $d_0 = u_0 \oplus u_1 \oplus u_2 \oplus u_3 \oplus u_4 \oplus u_5 \oplus u_6 \oplus u_7$, a second encoded bit is $d_1 = u_1 \oplus u_3 \oplus u_5 \oplus u_7$, a third encoded bit is $d_2 = u_2 \oplus u_3 \oplus u_6 \oplus u_7$, a fourth encoded bit is $d_3 = u_3 \oplus u_7$, a fifth encoded bit is $d_4 = u_4 \oplus u_5 \oplus u_6 \oplus u_7$, a sixth encoded bit is $d_5 = u_5 \oplus u_7$, a seventh encoded bit is $d_6 = u_6 \oplus u_7$, and an eighth encoded bit is $d_7 = u_7$.

Herein, ⊕ represents an exclusive OR operation.

For example, the encoding apparatus may encode the second bit sequence $u_{rv1_0}^{N-1}$, to obtain the third bit sequence $d_{rv1_0}^{N-1}$. For a specific encoding manner, refer to the foregoing manner of encoding the first bit sequence $u_{rv0_0}^{N-1}$. Details are not described herein again.

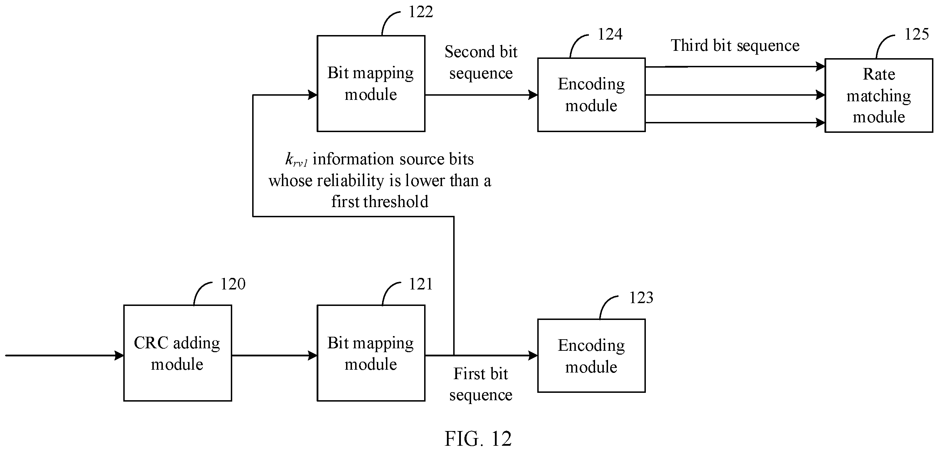

FIG. 12 shows a manner of generating the third bit sequence After being processed by a CRC adding module 120, the information source bit sequence may be used as an input of a bit mapping module 121. An output of the bit mapping module 121 is the first bit sequence. For a specific implementation of bit mapping, refer to the embodiment shown in FIG. 9. The encoding apparatus inputs, to a bit mapping module 122, the $k_{rv1}$ information source bits whose reliability is lower than the first threshold in the first bit sequence, and an output of the bit mapping module 122 is the second bit sequence. Alternatively, the encoding apparatus adds the CRC bits to the $k_{rv1}$ information source bits whose reliability is lower than the first threshold in the first bit sequence, and then performs inputting to a bit mapping module 122, and an output of the bit mapping module 122 is the second bit sequence. For a specific implementation of bit mapping, refer to the embodiment shown in FIG. 10. The encoding apparatus inputs the first bit sequence to an encoding module 123, and inputs the second bit sequence to the encoding module 124. An output of the encoding module 124 is the third bit sequence. The third bit sequence may be used as an input of a rate matching module 125. The rate matching module 125 is configured to perform rate matching on the bit sequence. For a specific function, refer to related descriptions in the following step S703. Details are not described herein.

For example, the encoding apparatus may encode the first bit sequence $u_{rv0_0}^{N-1}$, to obtain the bit sequence $d_{rv0_0}^{N-1}$. The encoding apparatus may further encode the second bit sequence $u_{rv1_0}^{N-1}$, to obtain a bit sequence $d_{tmp_0}^{N-1}$. The encoding apparatus may perform an exclusive OR operation on bits in the bit sequence $d_{rv0_0}^{N-1}$ and bits in the bit sequence $d_{tmp_0}^{N-1}$, to obtain the third bit sequence $d_{rv1_0}^{N-1}$. In other words, $d_{rv1_0}^{N-1}$ may satisfy the following Formula (2):

$$d_{rv1_0}^{N-1} = \mathrm{mod}\left(d_{tmp_0}^{N-1} + d_{rv0_0}^{N-1}, 2\right) \qquad \text{Formula (2)}$$

Herein, mod() represents a modulo operation.

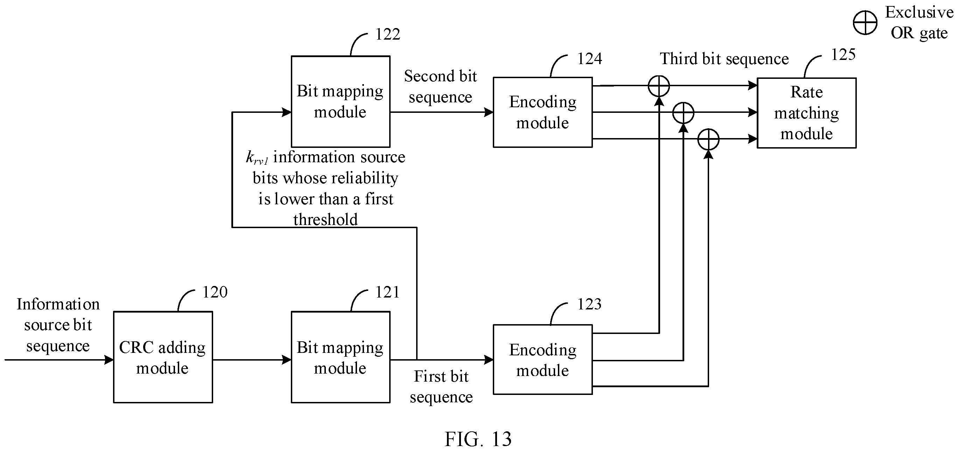

For example, FIG. 13 shows another manner of generating the third bit sequence. After being processed by a CRC adding module 120, the information source bit sequence may be used as an input of a bit mapping module 121. An output of the bit mapping module 121 is the first bit sequence. For a specific implementation of bit mapping, refer to the embodiment shown in FIG. 9. The encoding apparatus inputs, to a bit mapping module 122, the $k_{rv1}$ information source bits whose reliability is lower than the first threshold in the first bit sequence, and an output of the bit mapping module 122 is the second bit sequence. Alternatively, the encoding apparatus adds the CRC bits to the $k_{rv1}$ information source bits whose reliability is lower than the first threshold in the first bit sequence, and then performs inputting to a bit mapping module 122, and an output of the bit mapping module 122 is the second bit sequence. For a specific implementation of bit mapping, refer to the embodiment shown in FIG. 10. The encoding apparatus inputs the first bit sequence to an encoding module 123, inputs the second bit sequence to an encoding module 124, and performs an exclusive OR operation on bits in two encoded bit sequences, to obtain the third bit sequence. The third bit sequence may be used as an input of a rate matching module 125. The rate matching module 125 is configured to perform rate matching on the bit sequence. For a specific function, refer to related descriptions in the following step S703. Details are not described herein.

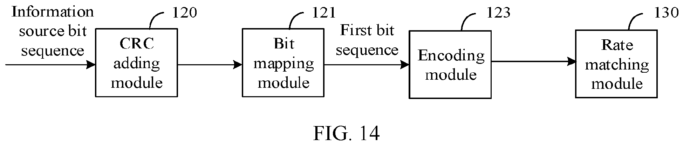

For example, FIG. 14 shows a manner of generating and processing the first bit sequence. After being processed by a CRC adding module 120, the information source bit sequence may be used as an input of a bit mapping module 121. An output of the bit mapping module 121 is the first bit sequence. For a specific implementation of bit mapping, refer to the embodiment shown in FIG. 9. The first bit sequence may also be used as an input of an encoding module 123. The bit sequence obtained by encoding the first bit sequence by the encoding apparatus may be used as an input of a rate matching module 130. The rate matching module 130 is configured to perform rate matching on the bit sequence. For a specific function, refer to related descriptions in the following step S703. Details are not described herein.

S703: The encoding apparatus maps, to an OFDM symbol, the third bit sequence and the bit sequence obtained by encoding the first bit sequence.

For a same information source bit sequence, the second bit sequence is introduced in the encoding method provided in this embodiment of this application, so that the third bit sequence and the bit sequence obtained by encoding the first bit sequence can be mapped to the OFDM symbol. This is different from a prior-art solution of directly encoding the first bit sequence and performing mapping to the OFDM symbol. Apparently, in this embodiment of this application, for the same information source bit sequence, the bit sequence obtained by encoding the first bit sequence is obtained, and more encoded codewords, that is, the third bit sequence, may be obtained. If a signal is affected by pulse interference in a transmission process, a proportion of an erroneous codeword in all codewords is smaller than that in the conventional technologies. In other words, in this embodiment of this application, more redundant information is introduced, so that a receive-end apparatus can correctly recover source data at a higher probability, thereby improving an encoding gain and improving reliability of an entire system. In addition, in this embodiment of this application, the $k_{rv1}$ information source bits whose reliability is lower than the first threshold may be selected from the first bit sequence to generate the second bit sequence. Because a bit with low reliability is more likely to encounter an error when the receive-end apparatus performs decoding, the second bit sequence is generated by using the $k_{rv1}$ information source bits, and the second bit sequence is further encoded to obtain the third bit sequence. In this way, decoding performance of the receive-end apparatus can be enhanced.

Optionally, step S703 includes: The encoding apparatus performs rate matching on the bit sequence obtained by encoding the first bit sequence, then performs segmentation to obtain $M_1$ groups of S sections, and performs the following operations on an $x_1$th group of S sections: The encoding apparatus repeats the $x_1$th group of S sections for $N_{rv0}$ times, and performs cyclic shift based on a corresponding CSS parameter in each repetition, to obtain $N_{rv0} \times S$ sections, where $M_1$, S, $x_1$, and $N_{rv0}$ are all positive integers, and $1 \leq x_1 \leq M_1$. The encoding apparatus performs rate matching on the third bit sequence, then performs segmentation to obtain $M_1$ groups of S sections, and performs the following operations on an $x_2$th group of S sections: The encoding apparatus repeats the $x_2$th group of S sections for $N_{rv1}$ times, and performs cyclic shift based on a corresponding CSS parameter in each repetition, to obtain $N_{rv1} \times S$ sections, where $x_2$ and $N_{rv1}$ are both positive integers, and $1 \leq x_2 \leq M_1$. The encoding apparatus sequentially concatenates the $N_{rv0} \times S$ sections and the $N_{rv1} \times S$ sections, and performs mapping to the OFDM symbol; or the encoding apparatus concatenates the $N_{rv0} \times S$ sections and the $N_{rv1} \times S$ sections in an interleaving manner in a unit of a section, and performs mapping to the OFDM symbol. In this solution, segmentation, repetition, cyclic shift, and combination are appropriately performed on the third bit sequence and the bit sequence obtained by encoding the first bit sequence, and then mapping is performed to the OFDM symbol, so that more encoded codewords are carried on the same OFDM symbol.

In this embodiment of this application, rate matching may include sub-block interleaving (sub-block interleaver), bit selection (bit selection), and bit interleaving (bit interleaver).

With reference to the foregoing Formula (1), the bit sequence obtained by encoding the first bit sequence $u_{rv0_0}^{N-1}$ by the encoding apparatus is $d_{rv0_0}^{N-1}$, where $d_{rv0_0}^{N-1} = \{d_0, d_1, ..., d_{N-1}\}$ may be used as an input bit sequence for sub-block interleaving. The encoding apparatus may divide $d_{rv0_0}^{N-1}$ into $m$ sub-blocks for interleaving. An interleaved bit sequence is $y_{rv0_0}^{N-1} = \{y_0, y_1, ..., y_{N-1}\}$.

For example, pseudo code for sub-block interleaving of polar code may be as follows:

$$1. \quad \boldsymbol{for} \ n = 0{:}N-1$$
$$2. \quad i = \lfloor m \times n/N \rfloor$$
$$3. \quad J(n) = P(i) \times (N/m) + mod(n, N/m)$$
$$4. \quad y_n = d_{J(n)}$$
$$5. \quad \boldsymbol{end \ for}$$

When $m = 32$, a sub-block interleaving pattern may be shown in Table 2.

**Table 2**

| i | P(i) | i | P(i) | i | P(i) | i | P(i) | i | P(i) | i | P(i) | i | P(i) | i | P(i) |
|---|------|---|------|----|------|----|------|----|------|----|------|----|------|----|------|
| 0 | 0 | 4 | 3 | 8 | 8 | 12 | 10 | 16 | 12 | 20 | 14 | 24 | 24 | 28 | 27 |
| 1 | 1 | 5 | 5 | 9 | 16 | 13 | 18 | 17 | 20 | 21 | 22 | 25 | 25 | 29 | 29 |
| 2 | 2 | 6 | 6 | 10 | 9 | 14 | 11 | 18 | 13 | 22 | 15 | 26 | 26 | 30 | 30 |
| 3 | 4 | 7 | 7 | 11 | 17 | 15 | 19 | 19 | 21 | 23 | 23 | 27 | 28 | 31 | 31 |

Herein, *i* represents a sub-block index after interleaving, and *P(i)* is a sub-block index, before interleaving, that corresponds to the sub-block index *i* after interleaving.

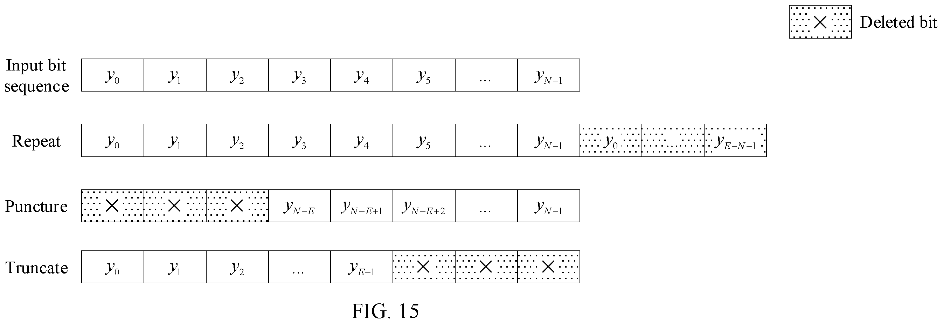

For example, FIG. 15 shows a bit selection process. An input of bit selection may be the bit sequence $y_{rv0_0}^{N-1} = \{y_0, y_1, \ldots, y_{N-1}\}$ obtained after sub-block interleaving. An output obtained through repetition, puncturing, or truncation is a bit sequence $e_{rv0_0}^{N-1} = \{e_0, e_1, \ldots, e_{N-1}\}$. The repetition means repeating a bit sequence $y_0, \ldots, y_{E-N-1}$, and concatenating the bit sequence $y_0, \ldots, y_{E-N-1}$ after a bit sequence $y_{rv0_0}^{N-1}$. The puncturing means deleting a previous segment of bit sequence $y_0, \ldots, y_{N-E-1}$, and reserving a current segment of bit sequence $y_{N-E}, \ldots, y_{N-1}$ as an output bit sequence. The truncation means deleting a current segment of bit sequence $y_E, \ldots, y_{N-1}$, and reserving a previous segment of bit sequence $y_0, \ldots, y_{E-1}$ as an output bit sequence.

In this embodiment of this application, bit interleaving is used to enable a burst error generated on a channel to spread throughout time, and convert the burst error into a random error, so that the receive-end apparatus can perform error correction by using a common coding technology. An input of bit interleaving may be a bit sequence $e_{rv0_0}^{N-1} = \{e_0, e_1, \ldots, e_{N-1}\}$ obtained through bit selection, and an output of the bit interleaving may be $f_{rv0_0}^{N-1} = \{f_0, f_1, \ldots, f_{N-1}\}$. Bit interleaving usually includes row-column interleaving and triangular interleaving.

For example, possible pseudo code of a row-column interleaver of *X* rows and Y columns is as follows, where $Y = \lceil E/X \rceil$, and $\lceil \cdot \rceil$ represents rounding up.

```
1.   k = 0
2.   for i = 0: X − 1
3.      for j = 0: ⌈E/X⌉ − 1
4.         if k < E then
5.            V_{i,j} = e_k
6.         else then
7.            V_{i,j} = ⟨NULL⟩
8.         end if
9.         k = k + 1
10.     end for
11.  end for
12.  k = 0

13.  for j = 0: ⌈E/X⌉ − 1
14.     for i = 0: X − 1
15.        if  V_{i,j} ≠ ⟨NULL⟩ then
16.           f_k = V_{i,j}
17.           k = k + 1
18.        end if
19.     end for
20.  end for
```

Similarly, the encoding apparatus may further perform rate matching on the third bit sequence. For a specific implementation, refer to the foregoing manner of performing rate matching on the bit sequence obtained by encoding the first bit sequence. Details are not described herein again.

Optionally, that the encoding apparatus performs rate matching on the bit sequence obtained by encoding the first bit sequence, and then performs segmentation to obtain $M_1$ groups of S sections includes that the encoding apparatus performs division to obtain M codewords, after rate matching is performed on the bit sequence obtained by encoding the first bit sequence, where each codeword includes E bits; the encoding apparatus repeats a final codeword in the M codewords for a plurality of times, so that a quantity of codewords is $H \times M_2$; the encoding apparatus divides the $H \times M_2$ codewords into $M_2$ groups, where each group includes H codewords; and the encoding apparatus performs the following operations on an $x_3^{th}$ group of H codewords: The encoding apparatus concatenates the H codewords, and places concatenated $H \times E$ bits into a first cyclic buffer; the encoding apparatus concatenates first $B \times S - H \times E$ bits in the H codewords at an end of the H codewords, where H, E, $M_2$, and $x_3$ are all positive integers, $1 \leq x_3 \leq M_2$, and B represents a quantity of bits in each section; and the encoding apparatus reads $B \times S$ bits from the cyclic buffer, to generate one group of S sections, where each section includes B bits. For a segmentation process, refer to step S301 and step S302 in the embodiment shown in FIG. 3. Details are not described herein again. This solution can improve compatibility with the conventional technologies.

Optionally, that the encoding apparatus performs rate matching on the third bit sequence, and then performs segmentation to obtain $M_1$ groups of S sections includes that the encoding apparatus performs division to obtain M codewords, after rate matching is performed on the third bit sequence, where each codeword includes E bits; the encoding apparatus repeats a final codeword in the M codewords for a plurality of times, so that a quantity of codewords is $H \times M_2$; the encoding apparatus divides the $H \times M_2$ codewords into $M_2$ groups, where each group includes H codewords; and the encoding apparatus performs the following operations on an $x_3^{th}$ group of H codewords: The encoding apparatus concatenates the H codewords, and places concatenated $H \times E$ bits into a first cyclic buffer; the encoding apparatus concatenates first $B \times S - H \times E$ bits in the H codewords at an end of the H codewords, where H, E, $M_2$, and $x_3$ are all positive integers, $1 \leq x_3 \leq M_2$, and B represents a quantity of bits in each section; and the encoding apparatus reads $B \times S$ bits from the cyclic buffer, to generate one group of S sections, where each section includes B bits. For a segmentation process, refer to step S301 and step S302 in the embodiment shown in FIG. 3. Details are not described herein again. This solution can improve compatibility with the conventional technologies.

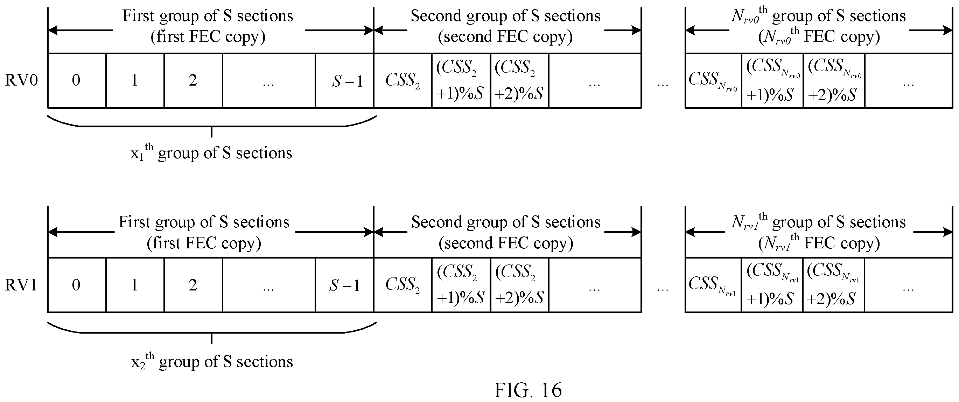

FIG. 16 shows a process of performing repetition and cyclic shift separately on the $x_1^{th}$ group of S sections and the $x_2^{th}$ group of S sections according to an embodiment of this application. The encoding apparatus repeats the $x_1^{th}$ group of S sections for $N_{rv0}$ times, and performs cyclic shift based on a corresponding CSS parameter in each repetition, to obtain $N_{rv0} \times S$ sections, that is, RV0. The encoding apparatus repeats the $x_2^{th}$ group of S sections for $N_{rv1}$ times, and performs cyclic shift based on a corresponding CSS parameter in each repetition, to obtain $N_{rv1} \times S$ sections, that is, RV1. The $x_1^{th}$ group of S sections are obtained based on the bit sequence obtained by encoding the first bit sequence. The $x_2^{th}$ group of S sections are obtained based on the third bit sequence. For a specific process of repetition and cyclic shift, refer to step S303 in the embodiment shown in FIG. 3. Details are not described herein again. In this embodiment of this application, a codeword repetition quantity $N_{rep}$ in an existing RCM solution is split into $N_{RV0}$ and $N_{RV1}$, and $N_{rep}$ is equal to a sum of $N_{RV0}$ and $N_{RV1}$. In other words, a quantity of repetitions of the $x_1^{th}$ group of S sections obtained based on the bit sequence obtained by encoding the first bit sequence is $N_{RV0}$, and a quantity of repetitions of the $x_2^{th}$ group of S sections obtained based on the third bit sequence is $N_{RV1}$.

In a possible implementation, the encoding apparatus may sequentially concatenate the $N_{rv0} \times S$ sections and the $N_{rv1} \times S$ sections, that is, [RV0, RV1], and perform mapping to the OFDM symbol.

In another possible implementation, the encoding apparatus may concatenate the $N_{rv0} \times S$ sections and the $N_{rv1} \times S$ sections in an interleaving manner in a unit of a section, that is, [$RV0_0$, $RV1_0$, $RV0_1$, $RV1_1$, ...] or [$RV1_0$, $RV0_0$, $RV1_1$, $RV0_1$, ...], and perform mapping to the OFDM symbol. Herein, $RV0_i$ represents a section whose index number is i in RV0, and $RV1_i$ represents a section whose index number is i in RV1.

Optionally, that the encoding apparatus performs rate matching on the bit sequence obtained by encoding the first bit sequence includes that the encoding apparatus performs bit interleaving on a fourth bit sequence, where the fourth bit sequence is a bit sequence obtained by performing sub-block interleaving and bit selection on the bit sequence obtained by encoding the first bit sequence by the encoding apparatus; and that the encoding apparatus performs rate matching on the third bit sequence includes that the encoding apparatus performs bit interleaving on a fifth bit sequence, where the fifth bit sequence is a bit sequence obtained by performing sub-block interleaving and bit selection on the third bit sequence by the encoding apparatus.

Optionally, the encoding method provided in embodiments of this application further includes: The encoding apparatus places a fourth bit sequence and a fifth bit sequence into a second cyclic buffer, where the fourth bit sequence is a bit sequence obtained by performing sub-block interleaving and bit selection on the bit sequence obtained by encoding the first bit sequence by the encoding apparatus, and the fifth bit sequence is a bit sequence obtained by performing sub-block interleaving and bit selection on the third bit sequence by the encoding apparatus. When the information source bit sequence is retransmitted, the encoding apparatus reads the bit sequence from an initial bit of the fourth bit sequence or the fifth bit sequence, and performs bit interleaving on the read bit sequence. In this solution, when the information source bit sequence is retransmitted, only a sequence in the second cyclic buffer needs to be read and then interleaved. In this case, steps of CRC addition, bit mapping, encoding, sub-block interleaving, and/or bit selection do not need to be performed again, to save software and hardware resources and time.

For example, the encoding apparatus performs sub-block interleaving and bit selection on the bit sequence obtained by encoding the first bit sequence, to obtain the fourth bit sequence $e_{rv0_0}^{E_{rv0}-1}$. Similarly, the encoding apparatus may further perform sub-block interleaving and bit selection on the third bit sequence, to obtain the fifth bit sequence $e_{rv1_0}^{E_{rv1}-1}$. In this case, the encoding apparatus may place the fourth bit sequence $e_{rv0_0}^{N-1}$ and the fifth bit sequence $e_{rv1_0}^{N-1}$ into the second cyclic buffer $E_b$, that is, $E_{B_0}^{E_{rv0}+E_{rv1}-1} = \{e_{rv0_0}^{E_{rv0}-1}, e_{rv1_0}^{E_{rv1}-1}\}$.

In this embodiment of this application, when the information source bit sequence is retransmitted, the encoding apparatus may read a part of the fourth bit sequence, the fourth bit sequence, the fourth bit sequence and a part of the fifth bit sequence, the fourth bit sequence and the fifth bit sequence, a part of the fifth bit sequence, or the fifth bit sequence from the second cyclic buffer based on an available physical resource. This is not limited in this embodiment of this application. A start location of a bit sequence, that is, a location of an initial bit in the bit sequence, may be shown in Table 3.

**Table 3**

| Name of a bit sequence | Fourth bit sequence | Fifth bit sequence | Bit sequence 1 read during retransmission | Bit sequence 2 read during retransmission |
|---|---|---|---|---|
| Start location | 0 | $E_{rv0}$ | 0 | $E_{rv0}$ |

It is assumed that a start location of the fourth bit sequence is a location 0. Because an offset of a start location of the fifth bit sequence relative to the start location of the fourth bit sequence is $E_{rv0}$, and the offset is a length of the fourth bit sequence, the start location of the fifth bit sequence is a location $E_{rv0}$. When the information source bit sequence is retransmitted, the encoding apparatus may read the bit sequence from the location 0 as the bit sequence 1 read during retransmission; or the encoding apparatus may read the bit sequence from the location $E_{rv0}$ as the bit sequence 2 read during retransmission.

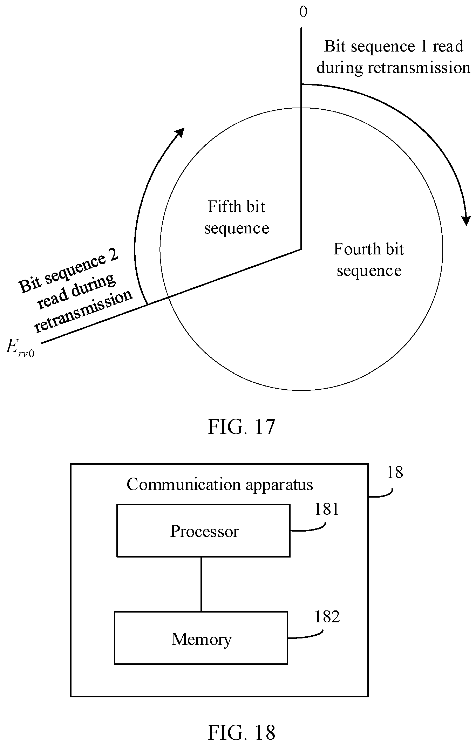

FIG. 17 is a diagram of a relationship between a bit sequence and a start location. The fourth bit sequence and the fifth bit sequence form the entire second buffer. The start location of the fourth bit sequence is 0, and the start location of the fifth bit sequence is $E_{rv0}$. A start location of a bit sequence read during retransmission may be the same as that of the fourth bit sequence, for example, a bit sequence 1 read during retransmission in FIG. 17. Alternatively, a start location of a bit sequence read during retransmission may be the same as that of the fifth bit sequence, for example, a bit sequence 2 read during retransmission in FIG. 17.

It should be noted that when the encoding apparatus is integrated into a transmit-end apparatus, actions in the embodiments shown in FIG. 7 to FIG. 17 may also be performed by the transmit-end apparatus.

Because the transmit-end apparatus in the foregoing embodiment may use the architecture of the communication apparatus 600 shown in FIG. 6, actions of the transmit-end apparatus in the foregoing embodiment may be performed by the processor 601 or the processor 607 in the communication apparatus 600 shown in FIG. 6 by invoking the application program code stored in the memory 603, to instruct the transmit-end apparatus to execute the actions. This is not limited in this embodiment.

It may be understood that in the foregoing embodiments, the methods and/or steps implemented by the encoding apparatus may be alternatively implemented by a component (for example, a chip or a circuit) that can be used in the encoding apparatus.

Correspondingly, an embodiment of this application further provides a communication apparatus, and the communication apparatus is configured to implement the foregoing various methods. It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used.

FIG. 18 is a diagram of a structure of a communication apparatus 18. The communication apparatus 18 includes a processor 181 and a memory 182 coupled to the processor 181.

For example, the communication apparatus 18 is the encoding apparatus in the foregoing method embodiments. The processor 181 is configured to perform bit mapping on $k_{rv1}$ information source bits whose reliability is lower than a first threshold in a first bit sequence, to obtain a second bit sequence, where the first bit sequence is a bit sequence obtained by performing bit mapping after CRC bits are added to an information source bit sequence, the $k_{rv1}$ information source bits are bits in the information source bit sequence, and a length of the first bit sequence is equal to a length of the second bit sequence. The processor 181 is further configured to perform an exclusive OR operation on bits in a bit sequence obtained by encoding the first bit sequence and bits in a bit sequence obtained by encoding the second bit sequence, to obtain a third bit sequence. Alternatively, the processor 181 is further configured to: encode the second bit sequence, to obtain a third bit sequence. The processor 181 is further configured to map, to an OFDM symbol, the third bit sequence and the bit sequence obtained by encoding the first bit sequence.

In a possible implementation, that the processor 181 is further configured to map, to an OFDM symbol, the third bit sequence and the bit sequence obtained by encoding the first bit sequence includes that the processor is configured to: perform rate matching on the bit sequence obtained by encoding the first bit sequence, then perform segmentation to obtain $M_1$ groups of S sections, and perform the following operations on an $x_1^{th}$ group of S sections: repeating the $x_1^{th}$ group of S sections for $N_{rv0}$ times, and performing cyclic shift based on a corresponding CSS parameter in each repetition, to obtain $N_{rv0} \times S$ sections, where $M_1$, S, $x_1$, and $N_{rv0}$ are all positive integers, and $1 \leq x_1 \leq M_1$; the processor is configured to: perform rate matching on the third bit sequence, then perform segmentation to obtain $M_1$ groups of S sections, and perform the following operations on an $x_2^{th}$ group of S sections: repeating the $x_2^{th}$ group of S sections for $N_{rv1}$ times, and performing cyclic shift based on a corresponding CSS parameter in each repetition, to obtain $N_{rv1} \times S$ sections, where $x_2$ and $N_{rv1}$ are both positive integers, and $1 \leq x_2 \leq M_1$; and the processor is configured to: sequentially concatenate the $N_{rv0} \times S$ sections and the $N_{rv1} \times S$ sections, and perform mapping to the OFDM symbol; or concatenate the $N_{rv0} \times S$ sections and the $N_{rv1} \times S$ sections in an interleaving manner in a unit of a section, and perform mapping to the OFDM symbol.

In a possible implementation, $K_{rv1}$ bits whose reliability is higher than a second threshold in the second bit sequence are obtained by adding $L_{rv1}$ CRC bits to $k_{rv1}$ information source bits whose reliability is lower than the first threshold in the first bit sequence, where $K_{rv1} = k_{rv1} + L_{rv1}$, $k_{rv1}$, $L_{rv1}$, and $K_{rv1}$ are positive integers.

In a possible implementation, that the processor 181 is further configured to: perform rate matching on the bit sequence obtained by encoding the first bit sequence, and then perform segmentation to obtain $M_1$ groups of S sections includes that the processor is configured to: perform division to obtain M codewords, after rate matching is performed on the bit sequence obtained by encoding the first bit sequence, where each codeword includes E bits; repeat a final codeword in the M codewords for a plurality of times, so that a quantity of codewords is $H \times M_2$; and divide the $H \times M_2$ codewords into $M_2$ groups, where each group includes H codewords; and the processor is configured to perform the following operations on an $x_3^{th}$ group of H codewords: concatenating the H codewords, and placing concatenated $H \times E$ bits into the memory 182; and concatenating first $B \times S - H \times E$ bits in the H codewords at an end of the H codewords, where H, E, $M_2$, and $x_3$ are all positive integers, $1 \leq x_3 \leq M_2$, and B represents a quantity of bits in each section; and reading $B \times S$ bits from the memory 182, to generate one group of S sections, where each section includes B bits.

In a possible implementation, that the processor 181 is further configured to: perform rate matching on the third bit sequence, and then perform segmentation to obtain $M_1$ groups of S sections includes that the processor is configured to: perform division to obtain M codewords, after rate matching is performed on the third bit sequence, where each codeword includes E bits; repeat a final codeword in the M codewords for a plurality of times, so that a quantity of codewords is $H \times M_2$; and divide the $H \times M_2$ codewords into $M_2$ groups, where each group includes H codewords; and the processor is configured to perform the following operations on an $x_3^{th}$ group of H codewords: concatenating the H codewords, and placing concatenated $H \times E$ bits into the memory 182; and concatenating first $B \times S - H \times E$ bits in the H codewords at an end of the H codewords, where H, E, $M_2$, and $x_3$ are all positive integers, $1 \leq x_3 \leq M_2$, and B represents a quantity of bits in each section; and reading $B \times S$ bits from the memory 182, to generate one group of S sections, where each section includes B bits.

In a possible implementation, that the processor 181 is further configured to perform rate matching on the bit sequence obtained by encoding the first bit sequence includes that the processor is configured to perform bit interleaving on a fourth bit sequence, where the fourth bit sequence is a bit sequence obtained by performing sub-block interleaving and bit selection on the bit sequence obtained by encoding the first bit sequence; and that the processor 181 is further configured to perform rate matching on the third bit sequence includes that the processor is configured to perform bit interleaving on a fifth bit sequence, where the fifth bit sequence is a bit sequence obtained by performing sub-block interleaving and bit selection on the third bit sequence.

In a possible implementation, the processor 181 is further configured to place a fourth bit sequence and a fifth bit sequence into the memory 182. The fourth bit sequence is a bit sequence obtained by performing sub-block interleaving and bit selection on the bit sequence obtained by encoding the first bit sequence. The fifth bit sequence is a bit sequence obtained by performing sub-block interleaving and bit selection on the third bit sequence. The processor 181 is further configured to: when the information source bit sequence is retransmitted, read the bit sequence from an initial bit of the fourth bit sequence or the fifth bit sequence, and perform bit interleaving on the read bit sequence.

All related content of the steps in the foregoing method embodiments may be cited in function descriptions of the corresponding functional modules. Details are not described herein again.

In this embodiment, the communication apparatus 18 is presented in a form of functional modules obtained through division in an integrated manner. The "module" herein may be an ASIC, a circuit, a processor that executes one or more software or firmware programs, a memory, an integrated logic circuit, and/or another component capable of providing the foregoing functions.

When the communication apparatus 18 is the encoding apparatus in the foregoing method embodiments, in a simple embodiment, a person skilled in the art may figure out that the communication apparatus 18 may be included in the communication apparatus 600 shown in FIG. 6.

For example, the processor 601 or 607 in the communication apparatus 600 shown in FIG. 6 may invoke the computer-executable instructions stored in the memory 603, so that the communication apparatus 600 performs the encoding method in the foregoing method embodiments. Specifically, functions/implementation processes of the processor 181 in FIG. 18 may be implemented by the processor 601 or 607 in the communication apparatus 600 shown in FIG. 6 by invoking the computer-executable instructions stored in the memory 603. Functions/implementation processes of the memory 182 in FIG. 18 may be implemented by the memory 603 in FIG. 6.

The communication apparatus 18 provided in this embodiment may perform the foregoing encoding method. Therefore, for technical effects that can be achieved by the communication apparatus 18, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on a chip) or an ASIC, or may be an independent semiconductor chip. In addition to a core configured to perform calculation or processing by executing a software instruction, the processor may further include a necessary hardware accelerator, for example, a field-programmable gate array (field-programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface. The at least one processor is coupled to a memory through an interface. When the at least one processor executes a computer program or instructions in the memory, the method in any one of the foregoing method embodiments is performed. In a possible implementation, the communication apparatus further includes the memory. Optionally, the chip system may include a chip, or may include a chip and another discrete component. This is not specifically limited in this embodiment of this application.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. An encoding method, wherein the method comprises:

   performing bit mapping on $k_{rv1}$ information source bits whose reliability is lower than a first threshold in a first bit sequence, to obtain a second bit sequence, wherein the first bit sequence is a bit sequence obtained by performing bit mapping after cyclic redundancy check CRC bits are added to an information source bit sequence, the $k_{rv1}$ information source bits are bits in the information source bit sequence, and a length of the first bit sequence is equal to a length of the second bit sequence;
   performing an exclusive OR operation on bits in a bit sequence obtained by encoding the first bit sequence and bits in a bit sequence obtained by encoding the second bit sequence, to obtain a third bit sequence; or encoding the second bit sequence, to obtain a third bit sequence; and
   mapping, to an orthogonal frequency-division multiplexing OFDM symbol, the third bit sequence and the bit sequence obtained by encoding the first bit sequence.

2. The method according to claim 1, wherein the mapping, to an OFDM symbol, the third bit sequence and the bit sequence obtained by encoding the first bit sequence comprises:
   performing rate matching on the bit sequence obtained by encoding the first bit sequence, then performing segmentation to obtain $M_1$ groups of S sections, and performing the following operations on an $x_1^{th}$ group of S sections:

   repeating the $x_1^{th}$ group of S sections for $N_{rv0}$ times, and performing cyclic shift based on a corresponding cyclic section shift CSS parameter in each repetition, to obtain $N_{rv0} \times S$ sections, wherein $M_1$, S, $x_1$, and $N_{rv0}$ are all positive integers, and $1 \leq x_1 \leq M_1$;
   performing rate matching on the third bit sequence, then performing segmentation to obtain $M_1$ groups of S sections, and performing the following operations on an $x_2^{th}$ group of S sections:

      repeating the $x_2^{th}$ group of S sections for $N_{rv1}$ times, and performing cyclic shift based on a corresponding CSS parameter in each repetition, to obtain $N_{rv1} \times S$ sections, wherein $x_2$ and $N_{rv1}$ are both positive integers, and $1 \leq x_2 \leq M_1$; and
      sequentially concatenating the $N_{rv0} \times S$ sections and the $N_{rv1} \times S$ sections, and performing mapping to the OFDM symbol; or
      concatenating the $N_{rv0} \times S$ sections and the $N_{rv1} \times S$ sections in an interleaving manner in a unit of a section, and performing mapping to the OFDM symbol.

3. The method according to claim 1 or 2, wherein $K_{rv1}$ bits whose reliability is higher than a second threshold in the second bit sequence are obtained by adding $L_{rv1}$ CRC bits to $k_{rv1}$ information source bits whose reliability is lower than the first threshold in the first bit sequence, wherein $K_{rv1} = k_{rv1} + L_{rv1}$, $k_{rv1}$, $L_{rv1}$, and $K_{rv1}$ are positive integers.

4. The method according to claim 2 or 3, wherein the performing rate matching on the bit sequence obtained by encoding the first bit sequence, and then performing segmentation to obtain $M_1$ groups of S sections comprises:

   performing division to obtain M codewords after rate matching is performed on the bit sequence obtained by encoding the first bit sequence, wherein each codeword comprises E bits;

repeating a final codeword in the M codewords for a plurality of times, so that a quantity of codewords is $H \times M_2$;
dividing the $H \times M_2$ codewords into $M_2$ groups, wherein each group comprises H codewords; and
performing the following operations on an $x_3^{th}$ group of H codewords:

concatenating the H codewords, and placing concatenated $H \times E$ bits into a first cyclic buffer; and concatenating first $B \times S$-$H \times E$ bits in the H codewords at an end of the H codewords, wherein H, E, $M_2$, and $x_3$ are all positive integers, $1 \leq x_3 \leq M_2$, and B represents a quantity of bits in each section; and
reading $B \times S$ bits from the cyclic buffer, to generate one group of S sections, wherein each section comprises B bits.

5. The method according to any one of claims 2 to 4, wherein the performing rate matching on the third bit sequence, and then performing segmentation to obtain $M_1$ groups of S sections comprises:

performing division to obtain M codewords after rate matching is performed on the third bit sequence, wherein each codeword comprises E bits;
repeating a final codeword in the M codewords for a plurality of times, so that a quantity of codewords is $H \times M_2$;
dividing the $H \times M_2$ codewords into $M_2$ groups, wherein each group comprises H codewords; and
performing the following operations on an $x_3^{th}$ group of H codewords:

concatenating the H codewords, and placing concatenated $H \times E$ bits into a first cyclic buffer; and concatenating first $B \times S$-$H \times E$ bits in the H codewords at an end of the H codewords, wherein H, E, $M_2$, and $x_3$ are all positive integers, $1 \leq x_3 \leq M_2$, and B represents a quantity of bits in each section; and
reading $B \times S$ bits from the cyclic buffer, to generate one group of S sections, wherein each section comprises B bits.

6. The method according to any one of claims 2 to 5, wherein the performing rate matching on the bit sequence obtained by encoding the first bit sequence comprises:

performing bit interleaving on a fourth bit sequence, wherein the fourth bit sequence is a bit sequence obtained by performing sub-block interleaving and bit selection on the bit sequence obtained by encoding the first bit sequence; and
the performing rate matching on the third bit sequence comprises:
performing bit interleaving on a fifth bit sequence, wherein the fifth bit sequence is a bit sequence obtained by performing sub-block interleaving and bit selection on the third bit sequence.

7. The method according to any one of claims 1 to 5, wherein the method further comprises:

placing a fourth bit sequence and a fifth bit sequence into a second cyclic buffer, wherein the fourth bit sequence is a bit sequence obtained by performing sub-block interleaving and bit selection on the bit sequence obtained by encoding the first bit sequence, and the fifth bit sequence is a bit sequence obtained by performing sub-block interleaving and bit selection on the third bit sequence; and
when the information source bit sequence is retransmitted, reading the bit sequence from an initial bit of the fourth bit sequence or the fifth bit sequence, and performing bit interleaving on the read bit sequence.

8. An encoding apparatus, wherein the encoding apparatus comprises a processor and a memory coupled to the processor;

the memory is configured to store a program and data;
the processor is configured to execute the program stored in the memory, to implement the following functions:

the processor is configured to perform bit mapping on $k_{rv1}$ information source bits whose reliability is lower than a first threshold in a first bit sequence, to obtain a second bit sequence, wherein the first bit sequence is a bit sequence obtained by performing bit mapping after cyclic redundancy check CRC bits are added to an information source bit sequence, the $k_{rv1}$ information source bits are bits in the information source bit sequence, and a length of the first bit sequence is equal to a length of the second bit sequence;
the processor is further configured to perform an exclusive OR operation on bits in a bit sequence obtained by encoding the first bit sequence and bits in a bit sequence obtained by encoding the second bit sequence, to obtain a third bit sequence; or the processor is further configured to encode the second bit sequence, to obtain a third bit sequence; and

the processor is further configured to map, to an orthogonal frequency-division multiplexing OFDM symbol, the third bit sequence and the bit sequence obtained by encoding the first bit sequence.

9. The encoding apparatus according to claim 8, wherein that the processor is further configured to map, to an OFDM symbol, the third bit sequence and the bit sequence obtained by encoding the first bit sequence comprises that

the processor is configured to: perform rate matching on the bit sequence obtained by encoding the first bit sequence, then perform segmentation to obtain $M_1$ groups of S sections, and perform the following operations on an $x_1^{th}$ group of S sections: repeating the $x_1^{th}$ group of S sections for $N_{rv0}$ times, and performing cyclic shift based on a corresponding cyclic section shift CSS parameter in each repetition, to obtain $N_{rv0} \times S$ sections, wherein $M_1$, S, $x_1$, and $N_{rv0}$ are all positive integers, and $1 \leq x_1 \leq M_1$;

the processor is configured to: perform rate matching on the third bit sequence, then perform segmentation to obtain $M_1$ groups of S sections, and perform the following operations on an $x_2^{th}$ group of S sections: repeating the $x_2^{th}$ group of S sections for $N_{rv1}$ times, and performing cyclic shift based on a corresponding CSS parameter in each repetition, to obtain $N_{rv1} \times S$ sections, wherein $x_2$ and $N_{rv1}$ are both positive integers, and $1 \leq x_2 \leq M_1$; and

the processor is configured to: sequentially concatenate the $N_{rv0} \times S$ sections and the $N_{rv1} \times S$ sections, and perform mapping to the OFDM symbol; or concatenate the $N_{rv0} \times S$ sections and the $N_{rv1} \times S$ sections in an interleaving manner in a unit of a section, and perform mapping to the OFDM symbol.

10. The encoding apparatus according to claim 8 or 9, wherein $k_{rv1}$ bits whose reliability is higher than a second threshold in the second bit sequence are obtained by adding $L_{rv1}$ CRC bits to $k_{rv1}$ information source bits whose reliability is lower than the first threshold in the first bit sequence, wherein $K_{rv1} = k_{rv1} + L_{rv1}$, $k_{rv1}$, $L_{rv1}$, and $K_{rv1}$ are positive integers.

11. The encoding apparatus according to claim 9 or 10, wherein that the processor is further configured to: perform rate matching on the bit sequence obtained by encoding the first bit sequence, and then perform segmentation to obtain $M_1$ groups of S sections comprises that

the processor is configured to: perform division to obtain M codewords, after rate matching is performed on the bit sequence obtained by encoding the first bit sequence, wherein each codeword comprises E bits; repeat a final codeword in the M codewords for a plurality of times, so that a quantity of codewords is $H \times M_2$; and divide the $H \times M_2$ codewords into $M_2$ groups, wherein each group comprises H codewords; and

the processor is configured to perform the following operations on an $x_3^{th}$ group of H codewords: concatenating the H codewords, and placing concatenated $H \times E$ bits into the memory; and concatenating first $B \times S - H \times E$ bits in the H codewords at an end of the H codewords, wherein H, E, $M_2$, and $x_3$ are all positive integers, $1 \leq x_3 \leq M_2$, and B represents a quantity of bits in each section; and reading $B \times S$ bits from the memory, to generate one group of S sections, wherein each section comprises B bits.

12. The encoding apparatus according to any one of claims 9 to 11, wherein that the processor is further configured to: perform rate matching on the third bit sequence, and then perform segmentation to obtain $M_1$ groups of S sections comprises that

the processor is configured to: perform division to obtain M codewords, after rate matching is performed on the third bit sequence, wherein each codeword comprises E bits; repeat a final codeword in the M codewords for a plurality of times, so that a quantity of codewords is $H \times M_2$; and divide the $H \times M_2$ codewords into $M_2$ groups, wherein each group comprises H codewords;

the processor is configured to perform the following operations on an $x_3^{th}$ group of H codewords: concatenating the H codewords, and placing concatenated $H \times E$ bits into the memory; and concatenating first $B \times S - H \times E$ bits in the H codewords at an end of the H codewords, wherein H, E, $M_2$, and $x_3$ are all positive integers, $1 \leq x_3 \leq M_2$, and B represents a quantity of bits in each section; and

the processor is configured to read $B \times S$ bits from the memory, to generate one group of S sections, wherein each section comprises B bits.

13. The encoding apparatus according to any one of claims 9 to 12, wherein that the processor is further configured to perform rate matching on the bit sequence obtained by encoding the first bit sequence comprises that

the processor is configured to perform bit interleaving on a fourth bit sequence, wherein the fourth bit sequence is a bit sequence obtained by performing sub-block interleaving and bit selection on the bit sequence obtained by encoding the first bit sequence; and

that the processor is further configured to perform rate matching on the third bit sequence comprises that the processor is configured to perform bit interleaving on a fifth bit sequence, wherein the fifth bit sequence is a bit sequence obtained by performing sub-block interleaving and bit selection on the third bit sequence.

14. The encoding apparatus according to any one of claims 8 to 12, wherein

the processor is further configured to place a fourth bit sequence and a fifth bit sequence into the memory, wherein the fourth bit sequence is a bit sequence obtained by performing sub-block interleaving and bit selection on the bit sequence obtained by encoding the first bit sequence, and the fifth bit sequence is a bit sequence obtained by performing sub-block interleaving and bit selection on the third bit sequence; and

the processor is further configured to: when the information source bit sequence is retransmitted, read the bit sequence from an initial bit of the fourth bit sequence or the fifth bit sequence, and perform bit interleaving on the read bit sequence.

15. A computer-readable storage medium, wherein the computer-readable storage medium stores a computer program, and when the computer program is executed by a computer, the computer is enabled to perform the method according to any one of claims 1 to 7.

16. A transmit-end apparatus, comprising a front-end module and the encoding apparatus according to any one of claims 8 to 14, wherein

the encoding apparatus is configured to: encode an information source bit sequence, and perform mapping to an OFDM symbol; and

the front-end module is configured to: convert an output of the encoding apparatus into a wireless signal, and send the wireless signal.

17. The transmit-end apparatus according to claim 16, wherein the transmit-end apparatus further comprises a modulation module, and that the front-end module is configured to: convert an output of the encoding apparatus into a wireless signal, and send the wireless signal comprises that

the front-end module is configured to modulate, by using the modulation module, the output of the encoding apparatus into a high-frequency signal; and

the front-end module is configured to: convert the high-frequency signal into a wireless signal, and send the wireless signal.

18. A communication system, comprising a receive-end apparatus and the transmit-end apparatus according to claim 16 or 17, wherein the receive-end apparatus is configured to: receive a wireless signal from the transmit-end apparatus, and recover an information source bit sequence based on the wireless signal.

| First group of S sections (first FEC copy) | | | | | Second group of S sections (second FEC copy) | | | | | | $N_{rep}$th group of S sections ($N_{rep}$th FEC copy) | | | |
|---|---|---|---|---|---|---|---|---|---|---|---|---|---|---|---|
| 0 | 1 | 2 | ... | $S-1$ | $CSS_2$ | $(CSS_2 +1)\%S$ | $(CSS_2 +2)\%S$ | ... | ... | $CSS_{N_{rep}}$ | $(CSS_{N_{rep}} +1)\%S$ | $(CSS_{N_{rep}} +2)\%S$ | ... |

FIG. 1

Start

S201

Divide $K_p$ by $N_{rep}$, and perform rounding down to obtain $X$

S202

Determine whether a remainder obtained by dividing $X$ by 4 is 0

Yes

No

S203a

Divide $K_p$ by $N_{rep}$, perform rounding down, and then subtract 1 from a round-down result to obtain $B$

S203b

Divide $K_p$ by $N_{rep}$, and perform rounding down to obtain $B$

S204

Divide $E$ by $B$, and perform rounding up to obtain $S$

S205

Determine whether $S$ is 1

No

Yes

S206

Select minimum $H$ based on which $S>1$ is satisfied, where $S=ceil(H*E/B)$

End

FIG. 2

A quantity of codewords can be exactly divided by H

| FEC codeword 1 | ... | FEC codeword H | ... | FEC codeword M | FEC codeword M |

Step S301

Repeat

$B*S$

| $E$ | $E$ |

| FEC codeword 1 | ... | FEC codeword H |

Step S302

| 0 | 1 | 2 | ... | $S-1$ |

$B$ bits

First group of S sections (first FEC copy)

Second group of S sections (second FEC copy)

$N_{rep}{}^{th}$ group of S sections ($N_{rep}{}^{th}$ FEC copy)

Step S303

| 0 | 1 | 2 | ... | $S-1$ | $CSS_2$ | $(CSS_2 +1)\%S$ | $(CSS_2 +2)\%S$ | ... | ... | $CSS_{N_{rep}}$ | $(CSS_{N_{rep}} +1)\%S$ | $(CSS_{N_{rep}} +2)\%S$ | ... |

$K_p$

| OFDM symbol |

Step S304

| 0 | 1 | 2 | ... | $N_{rep}-1$ | PRBS |

$B$ bits

FIG. 3

EP 4 492 714 A1

26

40

401 Transmit-end apparatus → 402 Receive-end apparatus

FIG. 4

Transmit-end apparatus 401

Information source bit sequence from a MAC layer

501 RCM IR encoding module

502 Modulation module

503 Front-end module

Receive-end apparatus 402

40

504 Front-end module

505 Demodulation module

506 RCM IR decoding module

Recovered information source bit sequence transmitted to a MAC layer

FIG. 5

600

601    607                                                                    603

Processor          Processor

CPU 0              CPU 0

CPU 1              CPU 1

602

                                                                              Memory

604              605              606

Communication      Output device      Input device
interface

FIG. 6

S701

An encoding apparatus performs bit mapping on $k_{rv1}$ information source bits whose reliability is lower than a first threshold in a first bit sequence, to obtain a second bit sequence

S702

The encoding apparatus performs an exclusive OR operation on bits in a bit sequence obtained by encoding the first bit sequence and bits in a bit sequence obtained by encoding the second bit sequence, to obtain a third bit sequence; or the encoding apparatus encodes the second bit sequence, to obtain a third bit sequence

S703

The encoding apparatus maps, to an OFDM symbol, the third bit sequence and the bit sequence obtained by encoding the first bit sequence

FIG. 7

A length of a bit sequence obtained by
adding CRC bits to $b_0^{K-L-1}$ is K

| $b_0 : b_{K-L-1}$ | $CRC_{K-L} : CRC_{K-1}$ |
|---|---|

FIG. 8

A bit sequence obtained by adding
CRC bits to an information source
bit sequence

First bit
sequence

⬚⬚⬚⬚⬚⬚⬚ Information bit

⬚ Frozen bit

Bit mapping

FIG. 9

A bit sequence
obtained by adding
CRC bits to an
information source
bit sequence

First bit
sequence

Second bit
sequence

Information bit

Frozen bit

Bit mapping

Bit mapping

FIG. 10

$u_0$      $d_0$

$u_1$      $d_1$

$u_2$      $d_2$

$u_3$      $d_3$

$u_4$      $d_4$

$u_5$      $d_5$

$u_6$      $d_6$

$u_7$      $d_7$

Exclusive
OR gate

FIG. 11

FIG. 12

EP 4 492 714 A1

EP 4 492 714 A1

FIG. 13

Information
source bit
sequence → CRC adding module (120) → Bit mapping module (121) → First bit sequence → Encoding module (123) → Rate matching module (130)

FIG. 14

FIG. 15

EP 4 492 714 A1

First group of S sections
(first FEC copy)

Second group of S sections
(second FEC copy)

$N_{rv0}{}^{th}$ group of S sections
($N_{rv0}{}^{th}$ FEC copy)

RV0

| 0 | 1 | 2 | ... | $S-1$ |
|---|---|---|-----|-------|

| $CSS_2$ | $(CSS_2$ $+1)\%S$ | $(CSS_2$ $+2)\%S$ | ... |
|---------|-------------------|-------------------|-----|

...

| $CSS_{N_{rv0}}$ | $(CSS_{N_{rv0}}$ $+1)\%S$ | $(CSS_{N_{rv0}}$ $+2)\%S$ | ... |
|-----------------|---------------------------|---------------------------|-----|

$x_1{}^{th}$ group of S sections

First group of S sections
(first FEC copy)

Second group of S sections
(second FEC copy)

$N_{rv1}{}^{th}$ group of S sections
($N_{rv1}{}^{th}$ FEC copy)

RV1

| 0 | 1 | 2 | ... | $S-1$ |
|---|---|---|-----|-------|

| $CSS_2$ | $(CSS_2$ $+1)\%S$ | $(CSS_2$ $+2)\%S$ | ... |
|---------|-------------------|-------------------|-----|

...

| $CSS_{N_{rv1}}$ | $(CSS_{N_{rv1}}$ $+1)\%S$ | $(CSS_{N_{rv1}}$ $+2)\%S$ | ... |
|-----------------|---------------------------|---------------------------|-----|

$x_2{}^{th}$ group of S sections

FIG. 16

FIG. 17

FIG. 18

## INTERNATIONAL SEARCH REPORT

| International application No. |
|---|
| **PCT/CN2023/089929** |

| A. | CLASSIFICATION OF SUBJECT MATTER |
|---|---|

H04L 1/00(2006.01)i

According to International Patent Classification (IPC) or to both national classification and IPC

| B. | FIELDS SEARCHED |
|---|---|

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, JPTXT, 3GPP, IEEE, IETF, EPONPL: 鲁棒通信, 电力线载波通信, 编码, 循环冗余校验, 比特, 序列, 可靠, 分段循环移位, 重复, 码字, 分段, 速率匹配, 交织, 异或, 正交频分复用, 级联, robust communication mode, RCM, power line communicatiotn, PLC, coding, CRC, bit, sequence, reliability, CSS, repeat, codeword, session, segment, section, rate match, interleav, Xor, cascade, OFDM

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 108123776 A (HUAWEI TECHNOLOGIES CO., LTD.) 05 June 2018 (2018-06-05) see entire document | 1-18 |
| A | CN 109150383 A (HUAWEI TECHNOLOGIES CO., LTD.) 04 January 2019 (2019-01-04) see entire document | 1-18 |
| A | CN 109600194 A (HUAWEI TECHNOLOGIES CO., LTD.) 09 April 2019 (2019-04-09) see entire document | 1-18 |
| A | CN 111183590 A (HUAWEI TECHNOLOGIES CO., LTD.) 19 May 2020 (2020-05-19) see entire document | 1-18 |
| A | WO 2020114573 A1 (HUAWEI TECHNOLOGIES CO., LTD.) 11 June 2020 (2020-06-11) see entire document | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 August 2023** | **07 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/089929**

| Patent document cited in search report | | | Publication date (day/month/year) | Patent family member(s) | | | Publication date (day/month/year) |
|---|---|---|---|---|---|---|---|
| CN | 108123776 | A | 05 June 2018 | EP | 3514997 | A1 | 24 July 2019 |
| | | | | EP | 3514997 | A4 | 20 November 2019 |
| | | | | US | 2019280719 | A1 | 12 September 2019 |
| | | | | US | 10917117 | B2 | 09 February 2021 |
| | | | | JP | 2019537378 | A | 19 December 2019 |
| | | | | WO | 2018099196 | A1 | 07 June 2018 |
| CN | 109150383 | A | 04 January 2019 | US | 2020136650 | A1 | 30 April 2020 |
| | | | | US | 11088708 | B2 | 10 August 2021 |
| | | | | EP | 3637731 | A1 | 15 April 2020 |
| | | | | EP | 3637731 | A4 | 17 June 2020 |
| | | | | WO | 2019001436 | A1 | 03 January 2019 |
| | | | | CN | 109150383 | B | 27 August 2021 |
| CN | 109600194 | A | 09 April 2019 | US | 2019149268 | A1 | 16 May 2019 |
| | | | | WO | 2019062145 | A1 | 04 April 2019 |
| | | | | EP | 3579470 | A1 | 11 December 2019 |
| | | | | EP | 3579470 | A4 | 29 April 2020 |
| | | | | US | 10666391 | B2 | 26 May 2020 |
| | | | | JP | 2020536432 | W | 10 December 2020 |
| CN | 111183590 | A | 19 May 2020 | EP | 3571772 | A1 | 27 November 2019 |
| | | | | WO | 2019048057 | A1 | 14 March 2019 |
| | | | | US | 2020099400 | A1 | 26 March 2020 |
| | | | | US | 2020119845 | A1 | 16 April 2020 |
| | | | | CN | 111183590 | B | 19 November 2021 |
| | | | | US | 11271594 | B2 | 08 March 2022 |
| | | | | US | 11394400 | B2 | 19 July 2022 |
| WO | 2020114573 | A1 | 11 June 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210515741